# EUROPEAN PATENT APPLICATION

(11) **EP 4 626 057 A1**
(43) Date of publication of application: **01.10.2025**
(21) Application number: 23905566.8
(22) Date of filing: 16.11.2023
(51) Int. Cl.: H04W 24/02

(54) **COMMUNICATION METHOD AND RELATED APPARATUS**

(30) Priority: 22.12.2022 CN 202211664984
(71) Applicant: Huawei Technologies Co., Ltd., Shenzhen, Guangdong 518129 (CN)
(72) Inventor: XIE, Xi, Shenzhen, Guangdong 518129 (CN); LI, Bingzhao, Shenzhen, Guangdong 518129 (CN); CHANG, Junren, Shenzhen, Guangdong 518129 (CN); LI, Jiaojiao, Shenzhen, Guangdong 518129 (CN)
(74) Representative: Goddar, Heinz J.
(86) International application number: PCT/CN2023/132036
(87) International publication number: WO 2024/131397

(57) **Abstract**

This application provides a communication method and a related apparatus. The method includes: receiving capability information from a terminal, where the capability information indicates a quantity of downlink multiple-input multiple-output layers DL MIMO layers capability supported by the terminal on at least one first band; and sending first capability indication information or second capability indication information, where the first capability indication information indicates a receive branch Rx branch supported by the terminal on at least one second band, the second capability indication information indicates an Rx branch supported by the terminal, and the at least one second band belongs to the at least one first band. The first capability indication information or the second capability indication information is determined based on the capability information. According to this method, an Rx branch capability of the terminal can be more accurately indicated.

## Description

This application claims priority to Chinese Patent Application No. 202211664984.4, filed with the China National Intellectual Property Administration on December 22, 2022 and entitled "COMMUNICATION METHOD AND RELATED APPARATUS", which is incorporated herein by reference in its entirety.

### TECHNICAL FIELD

Embodiments of this application relate to the field of wireless communication, and in particular, to a communication method and a related apparatus.

### BACKGROUND

A reduced capability (reduced capability, RedCap) is a new technology standard proposed by the fifth generation mobile communication technology (5th generation mobile communication technology, 5G) new radio (new radio, NR) standard. A reduced capability terminal (reduced capability UE, RedCap UE) is a terminal with reduced capabilities. Capabilities of the RedCap UE are lower than those in enhanced mobile broadband (enhanced mobile broadband, eMBB) and ultra-reliable and low latency communication (ultra-reliable and low latency communication, URLLC). For example, complexity of features of the RedCap UE may be reduced as follows: A maximum bandwidth capability is reduced, a quantity of transmit and receive antennas/antenna branches (branches) is reduced, a maximum quantity of multiple-input multiple-output (multiple-in multiple-out, MIMO) layers capability is reduced, a maximum modulation order (modulation order) capability is reduced, half-duplex frequency division duplexing (half-duplex frequency division duplexing, HD-FDD) is supported, and the like, to satisfy requirements of some communication scenarios.

At present, an access network device may adopt different processing mechanisms for RedCap UEs with different receive branch (Rx branch) capabilities, for example, whether to perform paging, or whether to bar the RedCap UEs from accessing or camping on a cell. Rx branch capabilities of RedCap UEs may be exchanged between access network devices or between an access network device and a core network device through inter-node messages. How an access network device accurately indicates an Rx branch capability of a terminal is a hotspot of current research.

### SUMMARY

Embodiments of this application provide a communication method and a related apparatus, to accurately indicate an Rx branch capability of a terminal.

According to a first aspect, this application provides a communication method. The method includes: Capability information from a terminal is received. The capability information indicates a quantity of downlink multiple-input multiple-output layers DL MIMO layers supported by the terminal on at least one first band. First capability indication information or second capability indication information is sent. The first capability indication information indicates a receive branch Rx branch supported by the terminal on at least one second band. The second capability indication information indicates an Rx branch supported by the terminal. The at least one second band belongs to the at least one first band. The first capability indication information or the second capability indication information is determined based on the capability information. According to this method, an Rx branch capability of the RedCap UE can be accurately indicated.

With reference to the first aspect, in a possible implementation, the first capability indication information includes a capability entry and a band identifier of the at least one second band. The capability entry indicates an Rx branch capability. One capability entry corresponds to a second band indicated by one band identifier. In this manner, the first capability indication information may explicitly indicate a correspondence between an Rx branch capability and a band.

Optionally, in consideration of that the standard has specified that the RedCap UE needs to support 2 Rx branches in the FR2, in the explicit indication manner, it is no longer necessary to indicate a capability status of the terminal on an FR2 band in the first capability indication information, and the first capability indication information may only indicate a capability status of the terminal on an FR1 band. That is, the band identifier included in the first capability indication information is only a band identifier of a band belonging to the FR1, and the capability entry included in the first capability indication information is only a capability entry corresponding to the band belonging to the FR1. In this way, an amount of information included in the first capability indication information can be reduced, and overheads of transferring the first capability indication information can be reduced.

With reference to the first aspect, in a possible implementation, the first capability indication information includes a capability entry, and the capability entry indicates an Rx branch capability. The first capability indication information is carried in a first message, the first message further includes band list information, and the band list information indicates the at least one second band supported by the terminal. One capability entry corresponds to one second band. In this manner, the first capability indication information may implicitly indicate a correspondence between an Rx branch capability and a band. Since at present, an inter-node message already includes the band list information indicating a band list supporting paging, in this manner, the band list information may be reused, thereby reducing overheads of transferring the first capability indication information.

With reference to the first aspect, in a possible implementation, the capability entry has a first value and a second value. The first value indicates that the terminal supports 1 Rx branch on a band corresponding to the capability entry. The second value indicates that the terminal supports 2 Rx branches on a band corresponding to the capability entry.

With reference to the first aspect, in a possible implementation, if the capability information indicates that the terminal supports 1 DL MIMO layer and 2 DL MIMO layers on one band, in the first capability indication information, a value of a capability entry corresponding to the band is the second value. In this manner, if capability information reported by the terminal indicates that the terminal supports 1 DL MIMO layer and 2 DL MIMO layers on one band, it is considered that an Rx branch capability of the terminal on the band is an Rx branch capability corresponding to a highest DL MIMO layer capability, that is, a 2 Rx branches capability. Therefore, in the first capability indication information, a value of a capability entry corresponding to the band is a second value.

With reference to the first aspect, in a possible implementation, the capability entry has a first value, a second value, and a third value. The first value indicates that the terminal supports 1 Rx branch on a band corresponding to the capability entry. The second value indicates that the terminal supports 2 Rx branches on a band corresponding to the capability entry. The third value indicates that the terminal supports 1 Rx branch and 2 Rx branches on a band corresponding to the capability entry. In this manner, if the capability information reported by the terminal indicates that the terminal supports 1 DL MIMO layer and 2 DL MIMO layers on one band, it is considered that an Rx branch capability of the terminal on the band is coexistence of two Rx branch capabilities, that is, a 1 Rx branch capability and a 2 Rx branches capability, and in the first capability indication information, a value of a capability entry corresponding to the band is the third value.

With reference to the first aspect, in a possible implementation, the method is applied to an access network device. The access network device has a capability of generating the first capability indication information and the second capability indication information. That the first capability indication information or the second capability indication information is sent includes: The second capability indication information is sent if the capability information indicates that the terminal supports a same DL MIMO layer on each of the at least one second band, or indicates that the terminal supports a same DL MIMO layer on each band that is of the at least one second band and that belongs to a frequency range 1 FR1. The first capability indication information is sent if the capability information does not indicate that the terminal supports a same DL MIMO layer on each of the at least one second band, nor indicates that the terminal supports a same DL MIMO layer on each band that is of the at least one second band and that belongs to a frequency range 1 FR1.

In this implementation, it is specified that an access network device (which may be understood as a new base station) having a capability of generating the first capability indication information and the second capability indication information uses the second capability indication information in specific cases and uses the first capability indication information in specific cases. This allows the new base station to accurately transfer RedCap Rx branch capability information and lowers signaling overheads for transferring the information as much as possible. If Rx branch capabilities supported by the RedCap UE in all (FR1) bands are the same, the terminal granularity-specific second capability indication information may be used, and the band granularity-specific first capability indication information does not need to be used, to avoid repeatedly indicating same information for each band.

With reference to the first aspect, in a possible implementation, the method is applied to an access network device. The access network device has a capability of generating the second capability indication information and does not have a capability of generating the first capability indication information. That the first capability indication information or the second capability indication information is sent includes: The second capability indication information is sent if the capability information indicates that the terminal supports a same DL MIMO layer on each of the at least one second band, or indicates that the terminal supports a same DL MIMO layer on each band that is of the at least one second band and that belongs to a frequency range 1 FR1.

In this implementation, it is specified that an access network device (which may be understood as a conventional base station) having a capability of generating the second capability indication information can use the second capability indication information in specific cases and cannot use the second capability indication information in specific cases, so that behaviors of a conventional base station can be regulated. A problem that a terminal cannot be paged because inconsistency between RedCap Rx branch capability information set by the conventional base station and a capability reported by the terminal causes a base station participating in the paging to incorrectly determine a paging range based on inaccurate information is avoided. In addition, the conventional base station is caused to have an opportunity to use the second capability indication information in specific cases, so that during paging, the base station has an opportunity to use a paging optimization mechanism to reduce unnecessary overheads.

According to a second aspect, this application provides a communication method. The method includes: Indication information is obtained. The indication information indicates whether a cell is barred for a terminal supporting a 1 receive branch 1 Rx branch and whether the cell is barred for a terminal supporting 2 Rx branches. It is determined, based on the indication information and a quantity of downlink multiple-input multiple-output layers DL MIMO layers supported by a terminal on a band to which the cell belongs, whether the cell is barred for the terminal.

Through this method, the terminal can determine, based on the indication information and a quantity of downlink multiple-input multiple-output layers DL MIMO layers supported by the terminal on a band to which the cell belongs, whether the cell is barred for the terminal. In this method, that the terminal determines, based on the indication information and the DL MIMO layer supported by the terminal on the band to which the cell belongs, whether the cell is barred for the terminal may be understood as that the terminal determines, based on the indication information and the Rx branch supported by the terminal on the band to which the cell belongs, whether the cell is barred for the terminal. The DL MIMO layer supported by the terminal on the band to which the cell belongs may indicate the Rx branch supported by the terminal on the band to which the cell belongs. The access network device and the terminal have consistent understanding of a DL MIMO layer capability of the terminal indicating an Rx branch capability of the terminal.

With reference to the second aspect, in a possible implementation, that it is determined, based on the indication information and the quantity of downlink multiple-input multiple-output layers DL MIMO layers supported by the terminal on the band to which the cell belongs, whether the cell is barred for the terminal includes: When the terminal supports 1 DL MIMO layer and 2 DL MIMO layers on the band to which the cell belongs, if the indication information indicates that the cell is barred for the terminal supporting 1 Rx branch and the cell is not barred for the terminal supporting 2 Rx branches, or if the indication information indicates that the cell is not barred for the terminal supporting 1 Rx branch and the cell is barred for the terminal supporting 2 Rx branches, it is determined that the cell is not barred for the terminal.

In this implementation, if the terminal supports 1 DL MIMO layer and 2 DL MIMO layers on the band to which the cell belongs, in a case that the cell is barred for one of the terminal supporting 1 Rx branch and the terminal supporting 2 Rx branches, it is specified that the terminal considers that the cell is not barred and can camp on or access the cell.

With reference to the second aspect, in a possible implementation, the method further includes: If the indication information indicates that the cell is barred for the terminal supporting 1 Rx branch, and the cell is not barred for the terminal supporting 2 Rx branches, the terminal camps on or accesses the cell by using a capability feature set corresponding to the 2 DL MIMO layers. If the indication information indicates that the cell is not barred for the terminal supporting 1 Rx branch, and the cell is barred for the terminal supporting 2 Rx branches, the terminal camps on or accesses the cell by using a capability feature set corresponding to the 1 DL MIMO layer.

In this implementation, the terminal may camp on or access the cell based on a capability feature set corresponding to the Rx branch that is not indicated as barred. This solution can increase a probability that the RedCap UE finds a cell that the RedCap UE can camp on or access, so that implementation of the terminal is more flexible. When a terminal using a capability feature set corresponding to an Rx branch is barred in a cell, the terminal can operate, without a need to trigger an update of a capability of the terminal, based on capabilities corresponding to another Rx branch capability, that is, the terminal does not need to unnecessarily update the capability of the terminal, so that communication performance of the RedCap UE is improved. In addition, adverse impact of the RedCap UE on system performance can also be avoided because when a terminal supports a specific Rx branch that is barred in a cell, the RedCap terminal camps on or accesses the cell based on a capability feature set corresponding to another Rx branch that is not barred, so that problems, such as consumption/occupation of more cell resources, can be avoided.

With reference to the second aspect, in a possible implementation, that it is determined, based on the indication information and the quantity of downlink multiple-input multiple-output layers DL MIMO layers supported by the terminal on the band to which the cell belongs, whether the cell is barred for the terminal includes: When the terminal supports 1 DL MIMO layer and/or 2 DL MIMO layers on the band to which the cell belongs, if the indication information indicates that the cell is barred for the terminal supporting 1 Rx branch and the cell is barred for the terminal supporting 2 Rx branches, it is determined that the cell is barred for the terminal.

In this implementation, it is specified that the terminal considers that the cell is barred and cannot camp on or access the cell only when the cell is barred for both a terminal supporting 1 Rx branch and a terminal supporting 2 Rx branches.

With reference to the second aspect, in a possible implementation, that the terminal determines, based on the indication information and the quantity of downlink multiple-input multiple-output layers DL MIMO layers capability supported by the terminal on the band to which the cell belongs, whether the cell is barred for the terminal includes: When the terminal supports 1 DL MIMO layer and/or 2 DL MIMO layers on the band to which the cell belongs, if the indication information indicates that the cell is not barred for the terminal supporting 1 Rx branch and the cell is not barred for the terminal supporting 2 Rx branches, it is determined that the cell is not barred for the terminal.

In this implementation, it is specified that the terminal considers that the cell is not barred and can camp on or access the cell when the cell is barred for neither of a terminal supporting 1 Rx branch and a terminal supporting 2 Rx branches. Optionally, if a terminal supports 1 DL MIMO layer and 2 DL MIMO layers on a band to which a cell belongs, the terminal can camp on or access the cell based on a capability feature set corresponding to a 1 DL MIMO layer capability or 2 DL MIMO layers capability, that is, the terminal can select any type of capability. Optionally, after accessing the cell, the terminal switches to an RRC connected state. In this case, the access network device may decide a specific capability feature set, of the terminal, based on which the terminal is configured. The terminal performs, based on the decision of the access network device, configuration corresponding to the capability feature set.

With reference to the second aspect, in a possible implementation, the band to which the cell belongs belongs to a frequency range 1 FR1. In this implementation, in consideration of that the standard has specified that the RedCap UE needs to support 2 Rx branches in an FR2, the cell bar determining scheme described in the foregoing implementation may be applied only to a cell on an FR1 band. For a cell on an FR2 band, the RedCap UE does not determine, based on a DL MIMO layer capability indicated by the RedCap UE, whether the cell is barred, but instead, directly considers that the RedCap UE supports 2 Rx branches, and then determines, based on whether the indication information of the access network device is set to "the cell is barred for the terminal supporting 2 Rx branches", whether the cell is barred for the terminal.

According to a third aspect, this application provides a communication apparatus, including a unit configured to perform the method according to any one of the first aspect and any possible implementation of the first aspect, or a unit configured to perform the method according to the second aspect and any possible implementation of the second aspect.

According to a fourth aspect, this application provides a communication apparatus. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus performs the method according to the first aspect and any possible implementation of the first aspect or the method according to the second aspect and any possible implementation of the second aspect.

The communication interface in the communication apparatus according to the fourth aspect is configured to: receive a signal from another communication apparatus other than the communication apparatus and perform transmission of the signal to the processor, or send a signal from the processor to another communication apparatus other than the communication apparatus. The communication interface may be a transceiver in the communication apparatus, for example, may be implemented through an antenna, a feeder, a codec, or the like in the communication apparatus. Alternatively, if the communication apparatus is a chip arranged in a communication apparatus, the communication interface may be an input/output interface of the chip, for example, an input/output pin.

According to a fifth aspect, a computer program product is provided. The computer program product includes computer program code. When the computer program code is run, the methods performed in the foregoing aspects are performed.

According to a sixth aspect, this application provides a computer-readable storage medium. The computer-readable storage medium stores a computer program or instructions. When the computer program or the instructions are executed by a communication apparatus, the methods performed in the foregoing aspects are implemented.

In this embodiment of this application, the access network device may send first capability indication information or second capability indication information to another access network device or a core network device based on capability information received from a terminal. The capability information indicates a quantity of downlink multiple-input multiple-output layers DL MIMO layers supported by the terminal on at least one first band. The first capability indication information indicates a receive branch Rx branch supported by the terminal on at least one second band. The second capability indication information indicates an Rx branch supported by the terminal. The at least one second band belongs to the at least one first band. The first capability indication information or the second capability indication information is determined based on the capability information. According to embodiments of this application, an Rx branch capability of the terminal can be accurately indicated.

### BRIEF DESCRIPTION OF DRAWINGS

FIG. 1 is a diagram of a network architecture of a wireless communication system according to an embodiment of this application;
FIG. 2 is a diagram of a 5G NR system architecture according to an embodiment of this application;
FIG. 3 is a diagram of a paging occasion and a paging cycle according to an embodiment of this application;
FIG. 4 is a flowchart of a communication method according to an embodiment of this application;
FIG. 5 is a flowchart of a communication method according to an embodiment of this application;
FIG. 6 is a diagram of a structure of a communication apparatus according to an embodiment of this application;
FIG. 7 is a diagram of a structure of another communication apparatus according to an embodiment of this application;
FIG. 8 is a diagram of a structure of another communication apparatus according to an embodiment of this application; and
FIG. 9 is a diagram of a structure of a chip according to an embodiment of this application.

### DESCRIPTION OF EMBODIMENTS

The following describes the technical solutions in embodiments of this application in more detail.

Terms used in the following embodiments of this application are merely intended to describe specific embodiments, but are not intended to limit this application. As used in the specification and the appended claims of this application, the singular expressions "a", "one", "said", "the foregoing", "the", and "this" are intended to include also the plural expression, unless the context expressly indicates the contrary. It should also be understood that the term "and/or" used in this application means and includes any or all possible combinations of one or more listed items. The term "a plurality of" used in this application means two or more.

It should be noted that, the terms "first", "second", "third", and the like in the specification, claims, and accompanying drawings of this application are intended to distinguish between similar objects but do not necessarily indicate a specific order or sequence. It should be understood that data used in such a way are interchangeable in proper circumstances so that embodiments of this application described herein can be implemented in an order other than the order illustrated or described herein. In addition, the term "include" and any variants thereof mean to cover the non-exclusive inclusion, for example, a process, method, system, product, or server that includes a list of steps or units is not necessarily limited to those steps or units that are expressly listed, but may include other steps or units not expressly listed or are inherent to the process, method, product, or device.

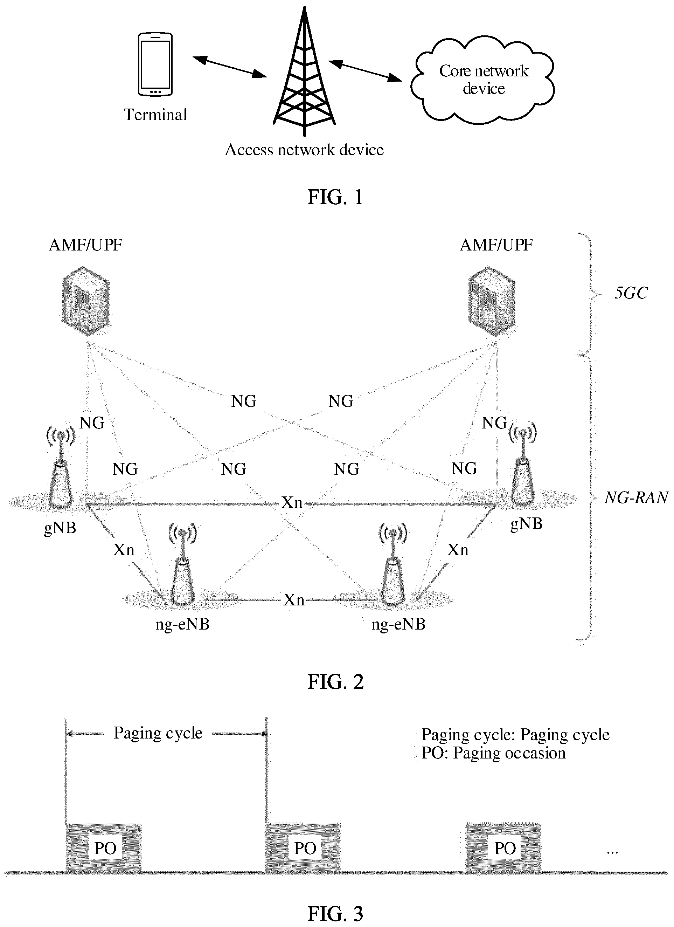

Embodiments of this application may be applied to a network architecture shown in FIG. 1. The network architecture shown in FIG. 1 is a network architecture of a wireless communication system. The network architecture usually includes a terminal, an access network (access network, AN) device, and a core network (core network, CN) device. Quantities and forms of the devices constitute no limitation on embodiments of this application. The terminal is connected to the access network device (or referred to as a radio access network (radio access network, RAN) device) in a wireless manner, and the access network device is connected to a core network device in a wireless or wired manner. The core network device and the access network device may be different independent physical devices. Alternatively, a function of the core network device and a logical function of the access network device may be integrated into a same physical device (the physical device may be referred to as a network device). Alternatively, some functions of the core network device and some functions of the access network device may be integrated into one physical device. FIG. 1 is merely a diagram. The communication system may further include another network device, for example, may further include a wireless relay device and a wireless backhaul device, which are not shown in FIG. 1.

Embodiments of this application may be also applied to a 5G NR system architecture shown in FIG. 2. FIG. 2 includes a 5G core network (5G Core Network, 5GC), an access and mobility management function (access and mobility management function, AMF) network element, and a user plane function (user plane function, UPF) network element. The NG-RAN is a 5G radio access network, and a gNB (that is, a 5G base station) and an ng-eNB (that is, a 4G base station connected to a 5GC) are two network elements in the NG-RAN. The AMF/UPF is connected to the gNB/ng-eNB by an NG interface, and the gNB/ng-eNB is connected to the gNB/ng-eNB by an Xn interface.

The serving base station gNB of the terminal is responsible for providing user plane and control plane protocol functions of 5G NR for the terminal. The serving base station ng-eNB of the terminal is responsible for providing the terminal with user plane and control plane protocol functions of evolved universal terrestrial radio access (evolved universal terrestrial radio access, E-UTRA) in 4th generation mobile communication (4th generation, 4G).

It should be noted that the wireless communication system mentioned in embodiments of this application includes, but is not limited to, an Internet of Things (internet of things, IoT) system, a long-term evolution (long-term evolution, LTE) system, a 5G system, a 6th generation (6th generation, 6G) mobile communication system, and a future mobile communication system. In some embodiments, the technical solutions in embodiments of this application may be further applied to a wireless local area network (Wireless Local Area Network, WLAN) network, may be further applied to a Vehicle-to-X (Vehicle-to-X, V2X) network, may be further applied to a non-terrestrial network (non-terrestrial networks, NTN), a satellite and high-altitude platform (satellites and High-Altitude Platforms, HAP) network, an enhanced Internet of Things (LTE enhanced MTO, eMTC), and may be further applied to another network. In some other embodiments, the technical solutions in embodiments of this application may be further applied to a communication-radar integrated communication system, a terahertz communication system, a communication system with a higher frequency, and the like. This is not specifically limited in this application.

The access network device in embodiments of this application is a device that is deployed in a radio access network and that can perform wireless communication with a terminal. The access network device is mainly responsible for functions such as radio resource management, quality of service (quality of service, QoS) management, and data compression, and encryption on an air interface side. The access network device may include base stations (Base Station, BS) in various forms, for example, a macro base station, a micro base station (also referred to as a small cell), a relay station, an access point, and the like. A base station may provide a communication service for a plurality of terminal devices, or a plurality of base stations may provide communication services for a same terminal device. The base station may be an eNB or an eNodeB (Evolved NodeB) in long term evolution (Long Term Evolution, LTE). The base station may be a gNB (gNodeB) in a 5G network, or may be a radio controller in a cloud radio access network (Cloud Radio Access Network, CRAN) scenario. The base station may alternatively be a base station in a future 6G network or an access network device in a future evolved PLMN network. The base station may alternatively be a wearable device, an in-vehicle device, or the like. In embodiments of this application, an apparatus configured to implement the function of the access network device may be the access network device, or may be an apparatus that can support the access network device in implementing the function, for example, a chip system. The apparatus may be installed in the access network device.

The terminal in embodiments of this application may also be referred to as a terminal device, and may be a device with a wireless transceiver function. The terminal in embodiments of this application may include various user equipments (user equipment, UE) that have a wireless communication function, an access terminal, a UE unit, a UE station, a mobile site, a mobile station, a remote site, a remote terminal, a mobile device, a UE terminal, a terminal device, a wireless communication device, a UE agent, a UE apparatus, or the like. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device with a wireless communication function, a computing device or another processing device connected to a wireless modem, an unmanned aerial vehicle (or drone for short) (unmanned aerial vehicle/drone, UAV), an in-vehicle device, a wearable device, a terminal in a future 5G network, a terminal in a future evolved PLMN network, or the like. In this embodiment of this application, an apparatus configured to implement a function of a terminal may be a terminal; or may be an apparatus that can support the terminal in implementing the function, for example, a chip system. The apparatus may be installed in the terminal. In this embodiment of this application, the chip system may include a chip, or may include a chip and another discrete component.

A core network device in embodiments of this application may include an AMF, an authentication server function (authentication server function, AUSF), a unified data management (unified data management, UDM), a session management function (session management function, SMF), a policy control function (policy control function, PCF), an application function (application function, AF), a UPF network element, a network slice selection function (network slice selection function, NSSF) network element, and the like.

The AMF network element is mainly responsible for signaling processing, for example, functions such as access control, mobility management, attachment and detachment, and gateway selection. In a case that the AMF network element provides a service for a session in a terminal, the AMF network element provides a control plane storage resource for the session, to store a session identifier, an SMF network element identifier associated with the session identifier, and the like. Generally, the terminal may communicate with the AMF via an N1 non-access stratum (non-access stratum, NAS) message, and a communication message between the terminal and the AMF may also be forwarded via an N2 message of the RAN. The RAN communicates with the AMF via the N2 message.

The AUSF network element has an authentication service function and is configured to process authentication requests for 3rd generation partnership project (3rd generation partnership project, 3GPP) access and non-3GPP access.

The UDM network element is configured to manage subscription information of the user and complete user authentication and authorization.

The SMF network element is responsible for user plane network element selection, user plane network element redirection, Internet Protocol (internet protocol, IP) address assignment, bearer establishment, modification, and release, and quality of service (quality of service, QoS) control.

The PCF network element is configured to generate and manage a user session and a QoS flow processing policy. The PCF network element is mainly for providing a unified policy framework to control network behaviors, and providing a policy rule for a control layer network function, and is also responsible for obtaining policy-related subscription information of a user.

The AF network element mainly supports interaction with a 3GPP core network to provide a service, for example, affecting data routing decision-making, a policy control function, or providing some third-party services for a network side. The AF network element may be located in an operator network, or may be located outside an operator network.

The UPF network element is configured for user packet handling, such as forwarding, charging, and the like. The UPF network element may be responsible for forwarding and receiving user data in a terminal. The UPF network element may receive the user data from a data network, and transmit the user data to the terminal by using an access network device. Alternatively, the UPF network element may receive the user data from the terminal by using an access network device, and forward the user data to a data network. A transmission resource and a scheduling function in the UPF network element that provide a service for the terminal are managed and controlled by the SMF network element.

The NSSF network element is configured to support flexible slice selection based on information such as user-requested and subscribed network slice selection assistance information (network slice selection assistance information, NSSAI), a user location area, a slice capacity, and slice current load.

An authentication, authorization, accounting (authentication, authorization, accounting, AAA) server is a server program that can process user access requests and provide authentication, authorization, and accounting services, and its main objective is to manage a user accessing a network server and provide a service for a user with an access permission.

Embodiments of this application may be applied to a device to device (device to device, D2D) system, a machine to machine (machine to machine, M2M) system, a vehicle to everything (vehicle to everything, V2X) system, or the like.

Embodiments of this application may be further applied to a next-generation microwave scenario, an NR-based microwave scenario, an integrated access and backhaul (integrated access and backhaul, IAB) scenario, or the like.

In embodiments of this application, the access network device and the terminal may be at fixed locations, or may be movable. The access network device and the terminal may be deployed on land, including an indoor or outdoor device, or a handheld or in-vehicle device. The access network device and the terminal device may be deployed on non-land, including an airborne device, a satellite, or the like. An application scenario of the access network device and the terminal is not limited in embodiments of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some related content/concepts in embodiments of this application.

### 1. RedCap UE

Three scenarios of 5G NR include eMBB, URLLC, and massive machine type of communication (massive machine type of communication, mMTC). Currently, some corresponding standardized technologies can be used to resolve and process use cases in the three scenarios. In addition, some other use cases have also been identified currently and need to be supported by further enhancing 5G NR. For example, the other identified use cases mainly include industrial sensors (industrial wireless sensors), video surveillance (video surveillance), wearables (wearables), and the like. Common requirements of the use cases include lower device complexity, more compact device sizes, support for FR1/FR2 frequency division duplexing (frequency division duplexing, FDD) and time division duplexing (time division duplexing, TDD) deployment scenarios, and the like. In the existing 3GPP standard, FR1 is a frequency range from 410 MHz to 7125 MHz, and FR2 is a frequency range from 24250 MHz to 52600 MHz.

RedCap is a technology of further enhancing 5G NR for the foregoing use cases and requirements of the use cases. The RedCap UE is a terminal with a reduced capability, and a capability of the RedCap UE is lower than that in eMBB and URLLC. For example, complexity of features of the RedCap UE may be reduced as follows: A maximum bandwidth capability is reduced, a quantity of transmit and receive antennas/antenna branches is reduced, a maximum quantity of MIMO layers capability is reduced, a maximum modulation order capability is reduced, HD-FDD is supported, and the like.

### 2. Rx branch capability

An Rx branch is a component that is in a receiver and that is configured to track, process, and measure a signal, and includes hardware, such as a radio component and a digital circuit, and dedicated software. The Rx branch capability is a parameter representing a capability of the receiver. If a RedCap UE has a 1 Rx branch capability, it indicates that the RedCap UE supports 1 Rx branch. If a RedCap UE has a 2 Rx branches capability, it indicates that the RedCap UE supports 2 Rx branches.

The Rx branch capability of a RedCap UE can have the following possible options: 1 Rx branch or 2 Rx branches, and has an association relationship with a DL MIMO layer. The 3GPP standard specifies that: (1) In an FR1, if a RedCap UE supports 1 Rx branch, the UE supports 1 DL MIMO layer; or if a RedCap UE supports 2 Rx branches, the UE supports 2 DL MIMO layers. (2) In an FR2, a RedCap UE needs to support 2 Rx branches, but can optionally support 1 DL MIMO layer or 2 DL MIMO layers.

The RedCap UE does not explicitly report an Rx branch capability, but implicitly indicates the Rx branch capability via a DL MIMO layer capability. To be specific, (in the FR1,) an access network device may deduce an Rx branch capability of the RedCap UE from a DL MIMO layer capability reported by the RedCap UE. It should be noted that, in the FR2, because the standard specifies that the RedCap UE needs to support 2 Rx branches, an Rx branch capability does not need to be implicitly reflected by a DL MIMO layer capability.

### 3. DL MIMO layer capability

The DL MIMO layer capability indicates a maximum quantity of spatial multiplexing layers (spatial multiplexing layers) supported by a UE for downlink (downlink, DL) reception. A RedCap UE has a 1 DL MIMO layer capability, indicating that the RedCap UE supports 1 DL MIMO layer, in other words, a maximum of one spatial multiplexing layer is supported by the RedCap UE for downlink reception. The RedCap UE has 2 DL MIMO layers capability, indicating that the RedCap UE supports 2 DL MIMO layers, in other words, a maximum of two spatial multiplexing layers is supported by the RedCap UE for downlink reception.

The terminal can report different DL MIMO layer capabilities for different bands. For example, the terminal may report that 2 DL MIMO layers are supported on a band A, and 4 DL MIMO layers are supported on a band B.

In addition, the terminal may also report different DL MIMO layer capabilities for a same band. Specifically, the terminal reports a plurality of capability feature sets (feature sets) for one band, and the plurality of feature sets may include different DL MIMO layer capabilities. For example, the terminal may report two feature sets for a band A. A DL MIMO layer capability in one of the feature sets is 1 DL MIMO layer, and a DL MIMO layer capability in the other of the feature sets is 2 DL MIMO layers.

### 4. Access control (access control)

The access control is an access rule for a terminal in an access network device, and is to control a quantity and types of terminals accessing the access network device. A cell bar (cell bar) mechanism is an access control mechanism.

In NR, an access network device sends a cell bar indication field (cellBarred) in a master information block (master information block, MIB). The field indicates whether a current cell is barred (barred) or not barred (notBarred). If a cell is barred, terminals in a radio resource control (radio resource control, RRC) idle state and an RRC inactive state cannot camp (camp) on the cell. In addition, the cell is not considered as a candidate cell for cell reselection (cell reselection) within a specific period of time.

A RedCap UE is a terminal with reduced capabilities. When the RedCap UE accesses an access network device, the access network device may need to provide more resources for the RedCap UE or perform special scheduling for the RedCap UE, in comparison with a non-RedCap UE. Therefore, currently, a dedicated cell bar mechanism is defined for the RedCap UE. The details are as follows.

There is a RedCap specific cell bar indication (RedCap specific cell bar indication) in a system information block 1 (system information block 1, SIB1). The cell bar indication indicates whether a current cell is barred or not barred for the RedCap UE. Specifically, the indication distinguishes a RedCap UE supporting one receive branch (1 Rx branch) and a RedCap UE supporting two receive branches (2 Rx branches). In other words, cell bar indications for the RedCap UE supporting 1 Rx branch and the RedCap UE supporting 2 Rx branches are independent of each other. For example, an access network device may set a RedCap specific cell bar indication such that the RedCap UE supporting 1 Rx branch considers that a cell is barred, and the RedCap UE supporting 2 Rx branches considers that the cell is not barred.

In addition, a cell bar indication field in an existing MIB is also applicable to a RedCap UE. That is, the RedCap UE needs to consider both the cell bar field in the MIB and the RedCap specific cell bar field in the SIB1. To be specific, (1) if the cell bar field in the MIB indicates that a current cell is barred, the RedCap UE cannot camp on the cell; and (2) if the cell bar field in the MIB indicates that the current cell is not barred, the RedCap UE continues to determine, based on the RedCap specific cell bar field in the SIB1, whether the current cell is barred, to determine whether to camp on the current cell.

Specifically, if the RedCap UE is a RedCap UE supporting 1 Rx branch, and the RedCap specific cell bar field in the SIB1 indicates that the current cell is barred (barred) for a RedCap UE supporting 1 Rx branch, the RedCap UE considers that the current cell is barred and cannot camp on or access the current cell. If the RedCap UE is a RedCap UE supporting 2 Rx branches, and the RedCap specific cell bar field in the SIB1 indicates that the current cell is barred (barred) for a RedCap UE supporting 2 Rx branches, the RedCap UE considers that the current cell is barred and cannot comp on or access the current cell.

According to the definition in the standard, the RedCap UE can report different DL MIMO layer capabilities on a same band in the FR1. For example, on a same band, the terminal may simultaneously indicate a 1 DL MIMO layer capability and a 2 DL MIMO layers capability. For a case in which different DL MIMO layer capabilities are reported on a same band, how to understand an Rx branch capability of a terminal is an urgent problem to be resolved. In addition, in the cell bar mechanism for RedCap, control is separately performed on a terminal supporting 1 Rx branch and a terminal supporting 2 Rx branches. Therefore, in this case, understanding of the Rx branch capability of the terminal affects the cell bar mechanism. At present, a terminal's understanding of an Rx branch capability of the terminal is not consistent with an access network device's understanding of the Rx branch capability of the terminal. When the Rx branch capability of the terminal considered by the terminal is different from the Rx branch capability of the terminal considered by the access network device, decision results considered by the two devices about whether the terminal is allowed to camp on/access the current cell are also inconsistent, which affects an access control effect in a system and also affects working performance of the terminal or system performance.

### 5. Paging (Paging)

An access network device may notify, via paging, a terminal in an RRC idle state (RRC_IDLE) or an RRC inactive state (RRC_INACTIVE) to receive a paging message (paging message), or an access network device may send, via paging, a short message (short message) to a terminal in RRC_IDLE, RRC_INACTIVE, or an RRC connected state (RRC_CONNECTED), to indicate an update of system information (system information, SI) or indicate an earthquake and tsunami warning/commercial mobile alert (earthquake and tsunami warning system/ commercial mobile alert service, ETWS/CAMS).

The terminal in the RRC idle state or the RRC inactive state monitors a paging occasion (paging occasion, PO) of the terminal in each paging cycle (paging cycle), to determine whether the access network device pages the terminal. The terminal calculates a PO position of the terminal based on terminal identification information and a paging-related parameter that are of the terminal and according to a calculation formula specified in the protocol. FIG. 3 is a diagram of a paging occasion and a paging cycle according to an embodiment of this application.

A basic paging procedure is as follows.

Step S1: An access network device or a core network device selects a specific paging range, and the access network device sends paging downlink control information (downlink control information, DCI) in a PO.

The paging range is an area in which the access network device or the core network device sends paging. The area is determined by the access network device or the core network device. For example, for a terminal in an RRC idle state, the core network device may use a registration area (registration area, RA) to which the terminal belongs as a paging range; and for a terminal in an RRC inactive state, the access network device may use a radio access network (radio access network, RAN)-based notification area (RAN-based notification area) to which the terminal belongs as a paging range.

The paging DCI may include scheduling information (including time-frequency domain information and other scheduling information of a resource for scheduling a paging message) of the paging message (paging message), a short message (short message), and/or the like.

Step S2: After receiving the paging DCI sent by the access network device, a terminal determines a subsequent operation based on content of the paging DCI.

Specifically, if the paging DCI includes the scheduling information of the paging message, the terminal receives and decodes the paging message on a physical downlink shared channel (physical downlink shared channel, PDSCH) based on the scheduling information, and then determines the subsequent operation based on content of the paging message. The paging message includes terminal identification information of one or more terminals paged by the access network device and/or access type information of a paged terminal. After decoding the paging message, the terminal determines whether the paging message includes a terminal identifier of the terminal: If the paging message does not include the terminal identifier of the terminal, the terminal ignores the paging message. If the paging message includes the terminal identifier of the terminal, the terminal determines a subsequent operation based on other content in the paging message.

Specifically, if the paging DCI includes the short message, the terminal receives updated system information and/or updated earthquake and tsunami warning/commercial mobile alert based on an indication of the short message. If the paging DCI includes the scheduling information of the paging message and the short message, the terminal separately receives the paging message and updated system information and/or updated earthquake and tsunami warning/commercial mobile alert according to a specified procedure.

### 6. Paging optimization mechanism

There is an optimization mechanism for paging of a RedCap UE, and the optimization mechanism is used by an access network device or a core network device to more accurately determine a range in which paging needs to be sent, to reduce unnecessary paging overheads. Details are as follows.

After the RedCap UE reports a capability to an access network device, the access network device may generate, based on capability information of the RedCap UE, an inter-node message (inter-node message) related to a paging capability (referred to as a UE radio paging information (*UERadioPagingInformation*) message). The inter-node message includes Rx branch capability information of the RedCap UE, and the Rx branch capability information indicates an Rx branch supported by the RedCap UE: 1 Rx branch or 2 Rx branches.

The access network device sends the inter-node message to the core network device. When paging the terminal, the core network device further sends information included in the inter-node message (namely, the UE radio paging information message) to each access network device participating in the current paging. Alternatively, when paging the terminal, the access network device sends the inter-node message to each access network device participating in the current paging.

After receiving the inter-node message or the information included in the inter-node message, the access network device participating in the paging may determine, based on RedCap Rx branch capability information indicated in the inter-node message and a cell bar setting status of a cell, whether to send paging for the RedCap UE. Specifically, if a RedCap specific cell bar field in an SIB1 of the cell indicates that the current cell is barred for a RedCap UE supporting 1 Rx branch, and the paged RedCap UE is a RedCap UE supporting 1 Rx branch, paging for the RedCap UE does not need to be sent in the cell. If a RedCap specific cell bar field in an SIB1 of the cell indicates that the current cell is barred for a RedCap UE supporting 2 Rx branches, and the paged RedCap UE is a RedCap UE supporting 2 Rx branches, paging for the RedCap UE does not need to be sent in the cell.

According to the definition in the standard, the RedCap UE may support different Rx branch capabilities on different bands in an FR1. That is, different Rx branch capabilities are indicated by reporting different DL MIMO layer capabilities. To be specific, the Rx branch capability of the RedCap UE is not that the RedCap UE can support only one of 1 Rx branch or 2 Rx branches, but instead, may be that the RedCap UE has different Rx branch capabilities on different bands.

However, in the inter-node message that is related to the terminal paging capability and that is exchanged between the access network device and the core network device/access network devices, the Rx branch capability information of the RedCap UE is at a terminal granularity. To be specific, the inter-node message indicates that one RedCap UE is either a RedCap UE supporting 1 Rx branch or a RedCap UE supporting 2 Rx branches. The Rx branch capability that is of the RedCap UE and that is indicated by the capability information does not match an actual Rx branch capability of the RedCap UE, and the capability information in the inter-node message is inaccurately set. For example, if the RedCap UE supports 1 Rx branch on a band A, and supports 2 Rx branches on a band B, the access network device does not know whether to set the Rx branch capability information of the RedCap UE to 1 Rx branch or 2 Rx branches in the inter-node message. Alternatively, the access network device may set, in the inter-node message, capability information that does not match the actual Rx branch capability of the RedCap UE, causing the access network device subsequently using the capability information to incorrectly decide not to send paging for a specific RedCap UE. Consequently, the RedCap UE cannot be paged.

In all the foregoing described application scenarios of the cell bar mechanism and the paging optimization mechanism, there is a problem that the terminal's understanding of an Rx branch capability of the terminal is inconsistent with or does not match the access network device/core network device's understanding of the Rx branch capability of the terminal, which causes negative impact on performance of a communication system. In some cases, the access network device cannot interact with the core network device or another access network device by using the RedCap Rx branch capability information, further causing an access network device participating in paging cannot optimize a paging range for a RedCap UE, resulting in unnecessary paging overheads. Alternatively, the access network device may set, in the inter-node message, capability information that does not match an actual Rx branch capability of a RedCap UE, causing the access network device subsequently using the capability information to incorrectly decide not to send paging for a specific RedCap UE. Consequently, the RedCap UE cannot be paged. In addition, due to an unclear manner of understanding an Rx branch capability of a RedCap UE, cell bar mechanism decision operation is ambiguous and may affect access control in the system, resulting in impact on working performance of the terminal or the system. In view of this, the solutions in embodiments of this application are provided.

In embodiments of this application, a manner of indicating the Rx branch capability of the terminal is optimized, so that the Rx branch capability of the terminal can be accurately indicated.

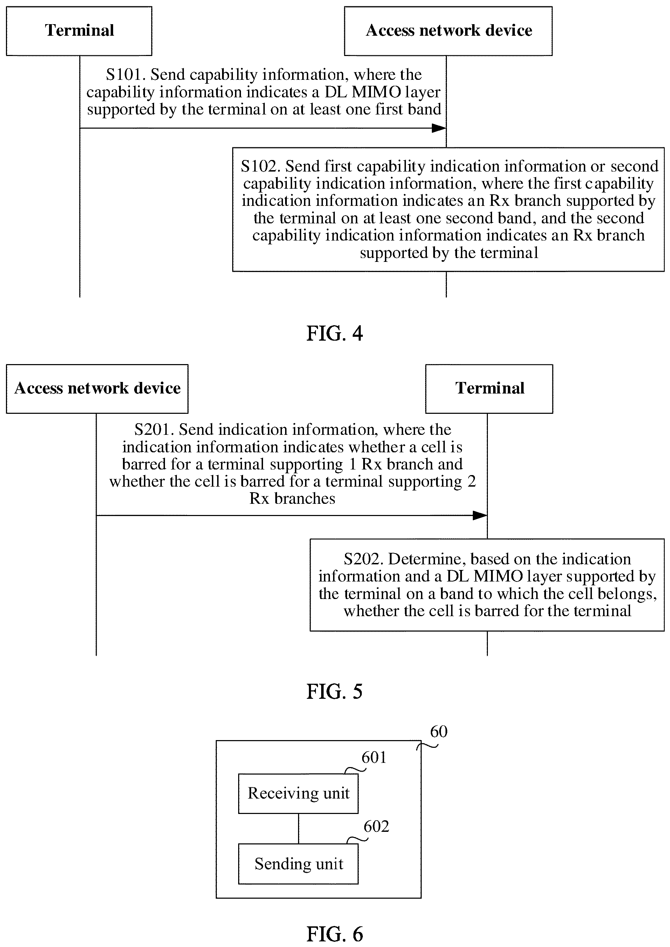

FIG. 4 is a flowchart of a communication method according to an embodiment of this application. The method may be implemented based on the network architecture and related devices described in the foregoing content. The method includes the following steps.

S101. A terminal sends capability information to an access network device, where the capability information indicates a DL MIMO layer supported by the terminal on at least one first band.

In this embodiment of this application, the terminal may be a RedCap UE. Optionally, the terminal may report different DL MIMO layer capabilities for different first bands. For example, the terminal may report that 1 DL MIMO layer is supported on a band A, and 2 DL MIMO layers are supported on a band B. Optionally, the terminal may report different DL MIMO layer capabilities for a same first band. For example, the terminal reports a plurality of capability feature sets (feature sets) for one first band, and the plurality of feature sets may include different DL MIMO layer capabilities. For example, the terminal may report two feature sets for a band A. A DL MIMO layer capability in one of the feature sets is 1 DL MIMO layer, and a DL MIMO layer capability in the other of the feature sets is 2 DL MIMO layers. The capability feature set may further include other capability information of the terminal.

Optionally, the terminal may explicitly or implicitly indicate the DL MIMO layer capability. Specifically, when the terminal has a 2 or more DL MIMO layers capability, a quantity of DL MIMO layers supported by the terminal is explicitly indicated (for example, that 2 layers are supported or 4 layers are supported is indicated). When the terminal has a 1 DL MIMO layer capability, the DL MIMO layer capability is implicitly reflected by not reporting a quantity of DL MIMO layers. That is, if the terminal does not report a DL MIMO layer capability on a specific band, it may indicate that the terminal supports 1 DL MIMO layer on the band. In this embodiment of this application, a RedCap UE has a 1 DL MIMO layer capability and/or a 2 DL MIMO layers capability on a specific band.

For example, the capability information reported by the terminal may be as follows.

For the band A: Only one carrier (carrier, CC) is supported.

### Feature set 1:

Downlink subcarrier spacing (DL subcarrier spacing): 30 kHz
Downlink channel bandwidth (DL channel bandwidth): 20 MHz
Quantity of downlink MIMO layers (DL MIMO layer): 2
Downlink modulation order (DL modulation order): 16QAM

### Feature set 2:

Downlink subcarrier spacing (DL subcarrier spacing): 15 kHz
Downlink channel bandwidth (DL channel bandwidth): 20 MHz
Quantity of downlink MIMO layers (DL MIMO layer): 1
Downlink modulation order (DL modulation order): bpsk

Another capability entry may be further included in the feature set. In addition, for one band, there may also be another capability entry outside the feature set.

This example indicates that the terminal reports two capability feature sets, namely, the feature set 1 and the feature set 2, for the band A. Specifically, in the feature set 1, the terminal supports 2 DL MIMO layers on the band A; and in the feature set 2, the terminal supports 1 DL MIMO layer on the band A.

S102. After receiving the capability information from the terminal, the access network device sends first capability indication information or second capability indication information, where the first capability indication information indicates an Rx branch supported by the terminal in at least one second band, and the second capability indication information indicates an Rx branch supported by the terminal.

Optionally, the first capability indication information or the second capability indication information is carried in a first message. The first message may be an inter-node message (inter-node message). For example, the inter-node message may be a UE radio paging information (*UERadioPagingInformation*) message. Optionally, the access network device sends the first message to a core network device. For example, the access network device may send the first message to an AMF. When paging the terminal, the core network device sends information included in the first message to each access network device participating in the current paging. Alternatively, when paging the terminal, the access network device sends the first message to each access network device participating in the current paging.

The first capability indication information or the second capability indication information is determined based on the capability information. The first capability indication information and the second capability indication information are further described below.

The first capability indication information indicates the Rx branch supported by the terminal on the at least one second band. The Rx branch capability indicated by the first capability indication information is at a granularity of a band. The at least one second band belongs to the at least one first band. To be specific, a band indicated in the capability indication information sent by the access network device is a subset or a full set of bands reported by the terminal.

In a possible implementation, the first capability indication information includes a capability entry. A value of the capability entry indicates an Rx branch capability of the terminal on one band. The access network device determines, based on a DL MIMO layer that is reported by the terminal and that is supported on each first band, an Rx branch supported by the terminal on each second band, that is, determines an Rx branch capability of the terminal on each second band, that is, determines a value of a capability entry corresponding to each second band.

In a possible implementation, the capability entry has a first value and a second value. The first value indicates that the terminal supports 1 Rx branch on a band corresponding to the capability entry. The second value indicates that the terminal supports 2 Rx branches on a band corresponding to the capability entry. For example, in this implementation, the capability entry may be represented as:

| | |
|---|---|
| rxBranches | ENUMERATED {one, two}, |

where "one" corresponds to the first value, and "two" corresponds to the second value.

Optionally, if the capability information reported by the terminal indicates that the terminal supports 1 DL MIMO layer on one band, it is considered that an Rx branch capability of the terminal on the band is a 1 Rx branch capability, and in the first capability indication information, a value of a capability entry corresponding to the band is the first value. If the capability information reported by the terminal indicates that the terminal supports 2 DL MIMO layers on one band, it is considered that an Rx branch capability of the terminal on the band is a 2 Rx branches capability, and in the first capability indication information, a value of a capability entry corresponding to the band is the second value. Optionally, if the capability information reported by the terminal indicates that the terminal supports 1 DL MIMO layer and 2 DL MIMO layers on one band, it is considered that an Rx branch capability of the terminal on the band is an Rx branch capability corresponding to a highest DL MIMO layer capability, that is, a 2 Rx branches capability, and in the first capability indication information, a value of a capability entry corresponding to the band is the second value. The band mentioned in the foregoing content may be a band belonging to an FR1.

Optionally, if the capability information reported by the terminal indicates that the terminal supports 1 DL MIMO layer and/or 2 DL MIMO layers on one band belonging to an FR2, in consideration of that the standard specifies that a RedCap UE needs to support 2 Rx branches in the FR2, it is considered that an Rx branch capability of the terminal on the band is a 2 Rx branches capability, and in the first capability indication information, a value of a capability entry corresponding to the band is the second value.

In another possible implementation, the capability entry has a first value, a second value, and a third value. The first value indicates that the terminal supports 1 Rx branch on a band corresponding to the capability entry. The second value indicates that the terminal supports 2 Rx branches on a band corresponding to the capability entry. The third value indicates that the terminal supports 1 Rx branch and 2 Rx branches on a band corresponding to the capability entry. For example, in this implementation, the capability entry may be represented as: 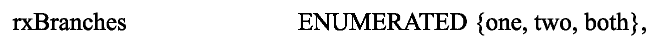 where "one" corresponds to the first value, "two" corresponds to the second value, and "both" corresponds to the third value.

Optionally, if the capability information reported by the terminal indicates that the terminal supports 1 DL MIMO layer on one band, it is considered that an Rx branch capability of the terminal on the band is a 1 Rx branch capability, and in the first capability indication information, a value of a capability entry corresponding to the band is the first value. If the capability information reported by the terminal indicates that the terminal supports 2 DL MIMO layers on one band, it is considered that an Rx branch capability of the terminal on the band is a 2 Rx branches capability, and in the first capability indication information, a value of a capability entry corresponding to the band is the second value. If the capability information reported by the terminal indicates that the terminal supports 1 DL MIMO layer and 2 DL MIMO layers on one band, it is considered that an Rx branch capability of the terminal on the band is coexistence of two Rx branch capabilities, that is, a 1 Rx branch capability and a 2 Rx branches capability, and in the first capability indication information, a value of a capability entry corresponding to the band is the third value. The band mentioned in the foregoing content may be a band belonging to an FR1.

Optionally, if the capability information reported by the terminal indicates that the terminal supports 1 DL MIMO layer and/or 2 DL MIMO layers on one band belonging to an FR2, in consideration of that the standard specifies that a RedCap UE needs to support 2 Rx branches in the FR2, it is considered that an Rx branch capability of the terminal on the band is a 2 Rx branches capability, and in the first capability indication information, a value of a capability entry corresponding to the band is the second value.

The first capability indication information may explicitly or implicitly indicate a correspondence between an Rx branch capability and a band.

Explicit manner: The first capability indication information includes a capability entry and a band identifier of the at least one second band. The capability entry indicates an Rx branch capability. One capability entry corresponds to a second band indicated by one band identifier. That is, the first capability indication information directly includes the capability entry indicating the Rx branch capability and the band identifier of the band corresponding to the capability entry. For example, the band identifier may be a band indicator (band indicator), for example, an NR band indicator (FreqBandIndicatorNR).

In an example, the first capability indication information includes three band indicators indicating three bands, and each of the three bands corresponds to one RedCap Rx branch capability entry. That is, the first capability indication information includes three band indicators and three RedCap Rx branch capability entries.

An example of the first message is as follows:

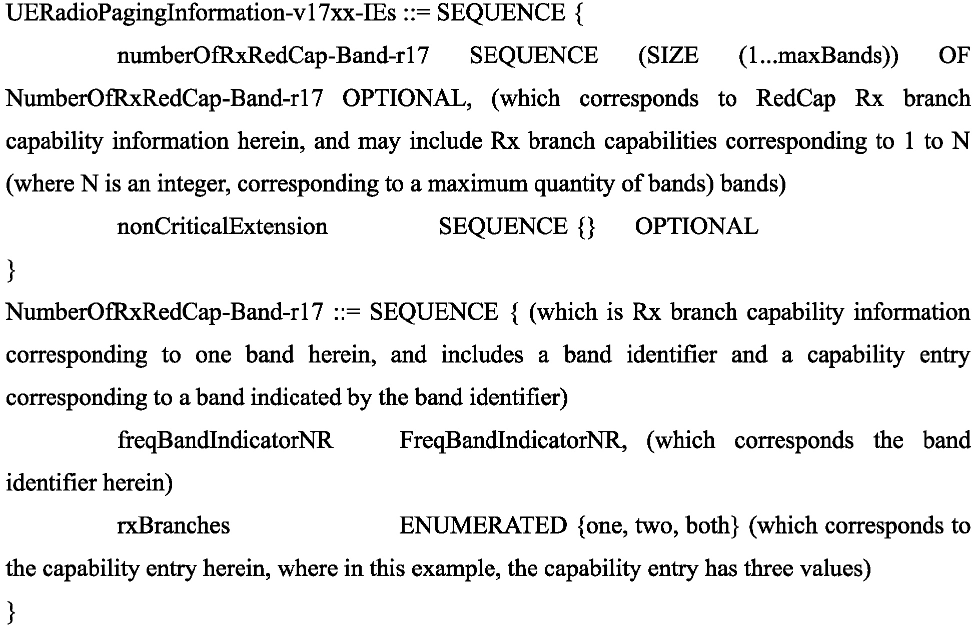

Optionally, in consideration of that the standard has specified that the RedCap UE needs to support 2 Rx branches in the FR2, in the explicit indication manner, it is no longer necessary to indicate a capability status of the terminal on an FR2 band in the first capability indication information, and the first capability indication information may only indicate a capability status of the terminal on an FR1 band. That is, the band identifier included in the first capability indication information is only a band identifier of a band belonging to the FR1, and the capability entry included in the first capability indication information is only a capability entry corresponding to the band belonging to the FR1. In this way, an amount of information included in the first capability indication information can be reduced, and overheads of transferring the first capability indication information can be reduced.

Implicit manner: The first capability indication information includes only a capability entry, and the capability entry indicates an Rx branch capability. The first message further includes band list information (for example, supportedBandListNRForPaging), and the band list information indicates the at least one second band supported by the terminal. One capability entry corresponds to one second band. Optionally, bands corresponding to N RedCap Rx branch capability entries in the first capability indication information are in a one-to-one correspondence with N bands indicated in the band list information, where N is an integer, and corresponds to a maximum quantity of bands. Since at present, an inter-node message already includes the band list information indicating a band list supporting paging, in this manner, the band list information may be reused, thereby reducing overheads of transferring the first capability indication information.

In an example, if the band list information indicates three bands (a band A, a band B, and a band C sequentially), the first capability indication information includes three RedCap Rx branch capability entries, and the three capability entries respectively correspond to the band A, the band B, and the band C, and respectively indicate Rx branch capabilities of the terminal on the band A, the band B, and the band C.

An example of the first message is as follows:

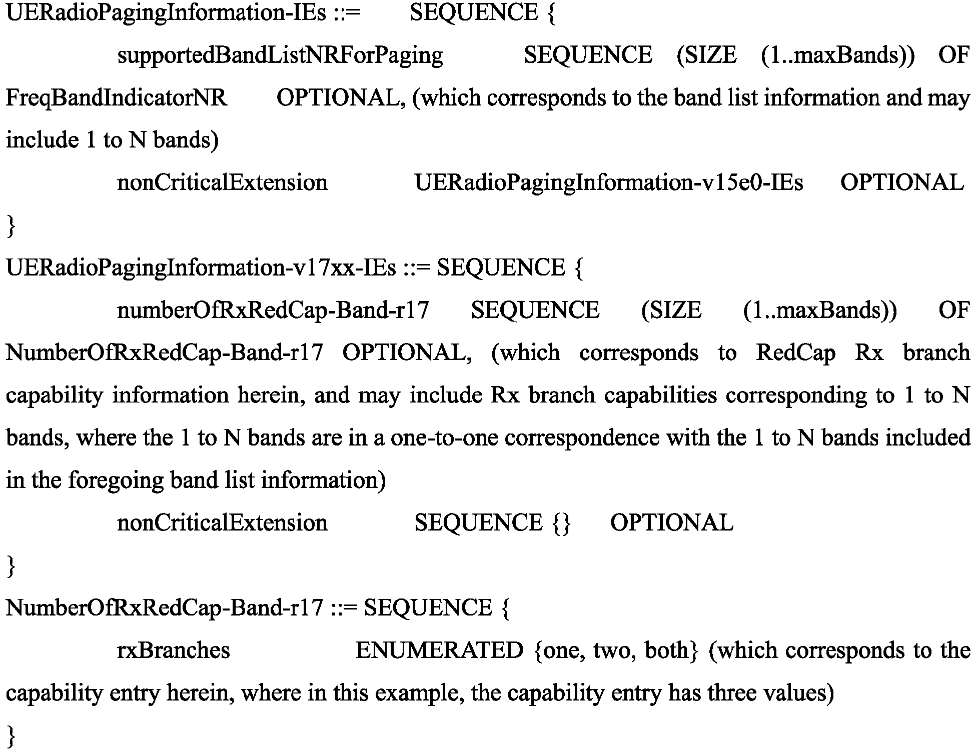

Optionally, the first capability indication information may indicate the correspondence between a capability entry and a band in either the explicit manner or the implicit manner. Alternatively, the first capability indication information may be in the explicit or implicit manner based on whether the band list information appears. Specifically, if the first message includes the band list information, the first capability indication information is in the implicit manner; or if the first message does not include the band list information, the first capability indication information is in the explicit manner.

The second capability indication information indicates the Rx branch supported by the terminal. The Rx branch capability indicated by the second capability indication information is at a granularity of a terminal. In a possible implementation, the second capability indication information includes a capability entry. A value of the capability entry indicates an Rx branch capability of the terminal. The access network device determines, based on a DL MIMO layer that is reported by the terminal and that is supported on each second band, the Rx branch supported by the terminal, that is, determines the Rx branch capability of the terminal, that is, determines the value of the capability entry. The at least one second band belongs to the at least one first band. To be specific, a band indicated in the capability indication information sent by the access network device is a subset or a full set of bands reported by the terminal.

In a possible implementation, the capability entry has a fourth value and a fifth value. The fourth value indicates that the terminal supports 1 Rx branch. The fifth value indicates that the terminal supports 2 Rx branches. For example, in this implementation, the capability entry may be represented as:

| | |
|---|---|
| rxBranches | ENUMERATED {one, two}, |

where "one" corresponds to the fourth value, and "two" corresponds to the fifth value.

In a possible implementation, if the capability information reported by the terminal indicates that the terminal supports 1 DL MIMO layer on each of at least one second band, it is considered that the Rx branch capability of the terminal is a 1 Rx branch capability, and in the second capability indication information, the value of the capability entry is the fourth value. Optionally, if the capability information reported by the terminal indicates that the terminal supports 2 DL MIMO layers on each of at least one second band, it is considered that the Rx branch capability of the terminal is a 2 Rx branches capability, and in the second capability indication information, the value of the capability entry is the fifth value.

Optionally, if the capability information reported by the terminal indicates that the terminal supports 1 DL MIMO layer and 2 DL MIMO layers on each of the at least one second band, it is considered that the Rx branch capability of the terminal is an Rx branch capability corresponding to a highest DL MIMO layer capability, that is, a 2 Rx branches capability, and in the first capability indication information, the value of the capability entry is the fifth value.

In another possible implementation, in consideration of that the standard has specified that a RedCap UE needs to support 2 Rx branches in the FR2, it may only be considered whether the same DL MIMO layer is supported by the terminal in the FR1. To be specific, if the capability information reported by the terminal indicates that the terminal supports 1 DL MIMO layers on each band that is of the at least one second band and that belongs to the FR1, it is considered that the Rx branch capability of the terminal is a 1 Rx branch capability, and in the second capability indication information, the value of the capability entry is the fourth value. Optionally, if the capability information reported by the terminal indicates that the terminal supports 2 DL MIMO layers on each band that is of the at least one second band and that belongs to the FR1, it is considered that the Rx branch capability of the terminal is a 2 Rx branches capability, and in the second capability indication information, the value of the capability entry is the fifth value.

Optionally, if the capability information reported by the terminal indicates that the terminal supports 1 DL MIMO layer and 2 DL MIMO layers on each band that is of the at least one second band and that belongs to the FR1, it is considered that the Rx branch capability of the terminal is an Rx branch capability corresponding to a highest DL MIMO layer capability, that is, a 2 Rx branches capability, and in the first capability indication information, the value of the capability entry is the fifth value.

In another possible implementation, the capability entry has a fourth value, a fifth value, and a sixth value. The fourth value indicates that the terminal supports 1 Rx branch. The fifth value indicates that the terminal supports 2 Rx branches. The sixth value indicates that the terminal supports 1 Rx branch and 2 Rx branches. For example, in this implementation, the capability entry may be represented as:

| | |
|---|---|
| rxBranches | ENUMERATED {one, two, both}, |

where "one" corresponds to the fourth value, "two" corresponds to the fifth value, and "both" corresponds to the sixth value.

In a possible implementation, if the capability information reported by the terminal indicates that the terminal supports 1 DL MIMO layer on each of at least one second band, it is considered that the Rx branch capability of the terminal is a 1 Rx branch capability, and in the second capability indication information, the value of the capability entry is the fourth value. Optionally, if the capability information reported by the terminal indicates that the terminal supports 2 DL MIMO layers on each of at least one second band, it is considered that the Rx branch capability of the terminal is a 2 Rx branches capability, and in the second capability indication information, the value of the capability entry is the fifth value. If the capability information reported by the terminal indicates that the terminal supports 1 DL MIMO layer and 2 DL MIMO layers on each of the at least one second band, it is considered that the Rx branch capability of the terminal is coexistence of two Rx branch capabilities, that is, a 1 Rx branch capability and a 2 Rx branches capability, and in the first capability indication information, the value of the capability entry is the sixth value.

In another possible implementation, in consideration of that the standard has specified that a RedCap UE needs to support 2 Rx branches in the FR2, it may only be considered whether the same DL MIMO layer is supported by the terminal in the FR1. To be specific, if the capability information reported by the terminal indicates that the terminal supports 1 DL MIMO layers on each band that is of the at least one second band and that belongs to the FR1, it is considered that the Rx branch capability of the terminal is a 1 Rx branch capability, and in the second capability indication information, the value of the capability entry is the fourth value. Optionally, if the capability information reported by the terminal indicates that the terminal supports 2 DL MIMO layers on each band that is of the at least one second band and that belongs to the FR1, it is considered that the Rx branch capability of the terminal is a 2 Rx branches capability, and in the second capability indication information, the value of the capability entry is the fifth value. If the capability information reported by the terminal indicates that the terminal supports 1 DL MIMO layer and 2 DL MIMO layers on each band that is of the at least one second band and that belongs to the FR1, it is considered that the Rx branch capability of the terminal is coexistence of two Rx branch capabilities, that is, a 1 Rx branch capability and a 2 Rx branches capability, and in the first capability indication information, the value of the capability entry is the sixth value.

The following further describes a policy of sending the first capability indication information or the second capability indication information by the access network device. In this embodiment of this application, whether to send the first capability indication information or the second capability indication information may be selected based on a capability of the access network device and the capability information reported by the terminal.

In a possible implementation, the access network device has only a capability of generating the second capability indication information, and does not have a capability of generating the first capability indication information. Such an access network device may be understood as a conventional base station.

In this case, if the capability information indicates that the terminal supports a same DL MIMO layer on each of the at least one second band, the second capability indication information is sent. If the capability information does not indicate that the terminal supports a same DL MIMO layer on each of the at least one second band, the access network device does not send the capability indication information.

Optionally, in consideration of that the standard has specified that a RedCap UE needs to support 2 Rx branches in the FR2, it may only be considered whether the same DL MIMO layer is supported by the terminal in the FR1. To be specific, if the capability information indicates that the terminal supports the same DL MIMO layer on each band that is of the at least one second band and that belongs to the FR1, the second capability indication information is sent. If the capability information does not indicate that the terminal supports the same DL MIMO layer on each band that is of the at least one second band and that belongs to the FR1, the access network device does not send the capability indication information.

In this implementation, it is specified that the conventional base station can use the second capability indication information in specific cases and cannot use the second capability indication information in specific cases, so that behaviors of the conventional base station can be regulated. A problem that a terminal cannot be paged because inconsistency between RedCap Rx branch capability information set by the conventional base station and a capability reported by the terminal causes a base station participating in the paging to incorrectly determine a paging range based on inaccurate information is avoided. In addition, the conventional base station is caused to have an opportunity to use the second capability indication information in specific cases, so that during paging, the base station has an opportunity to use a paging optimization mechanism to reduce unnecessary overheads.

In another possible implementation, the access network device has a capability of generating both the first capability indication information and the second capability indication information. Such an access network device may be understood as a new base station.

Optionally, the access network device may generate and send the first capability indication information.

Optionally, if the capability information indicates that the terminal supports a same DL MIMO layer on each of the at least one second band, the access network device sends the second capability indication information; or if the capability information does not indicate that the terminal supports a same DL MIMO layer on each of the at least one second band, the access network device sends the first capability indication information.

Optionally, in consideration of that the standard has specified that a RedCap UE needs to support 2 Rx branches in the FR2, it may only be considered whether the same DL MIMO layer is supported by the terminal in the FR1. To be specific, if the capability information indicates that the terminal supports the same DL MIMO layer on each band that is of the at least one second band and that belongs to the FR1, the second capability indication information is sent. If the capability information does not indicate that the terminal supports the same DL MIMO layer on each band that is of the at least one second band and that belongs to the FR1, the first capability indication information is sent.

Optionally, if the first capability indication information is indicated in the explicit indication manner described above, the first capability indication information may indicate only an Rx branch capability supported on a band in the FR1, but does not indicate an Rx branch capability supported on a band in the FR2.

In this implementation, it is specified that the new base station uses the second capability indication information in specific cases and uses the first capability indication information in specific cases. This allows the new base station to accurately transfer RedCap Rx branch capability information and lowers signaling overheads for transferring the information as much as possible. If Rx branch capabilities supported by the RedCap UE in all (FR1) bands are the same, the terminal granularity-specific second capability indication information may be used, and the band granularity-specific first capability indication information does not need to be used, to avoid repeatedly indicating same information for each band.

Specifically, for how to set a value of the capability entry included in the second capability indication information, refer to the description of the foregoing content.

In the embodiment corresponding to FIG. 4, in consideration of how to cause capability indication information transmitted between access network devices and between an access network device and a core network device to match capability information reported by a terminal, the band granularity-specific first capability indication information is introduced. In addition, a selection policy for sending the first capability indication information and the second capability indication information is provided, to cause both the conventional base station and the new base station to normally transfer the RedCap Rx branch capability information. In this way, during paging, a base station can optimize a paging range by using the information, to reduce unnecessary paging overheads.

FIG. 5 is a flowchart of another communication method according to an embodiment of this application. The method may be implemented based on the network architecture and related devices described in the foregoing content. The method includes the following steps.

S201. An access network device sends indication information to a terminal, where the indication information indicates whether a cell is barred for a terminal supporting 1 Rx branch and whether the cell is barred for a terminal supporting 2 Rx branches.

Optionally, the indication information may be carried in an SIB1 sent by the access network device. For example, the indication information may be a RedCap specific *cellBarred* field (for example, *cellBarredRedCap1Rx* and *cellBarredRedCap2Rx*). Cell bar indications for a RedCap UE supporting 1 Rx branch and a RedCap UE supporting 2 Rx branches in the indication information are independent of each other.

S202. After obtaining the indication information, the terminal determines, based on the indication information and a DL MIMO layer supported by the terminal on a band to which the cell belongs, whether the cell is barred for the terminal.

In this embodiment of this application, that the terminal determines, based on the indication information and the DL MIMO layer supported by the terminal on the band to which the cell belongs, whether the cell is barred for the terminal may be understood as that the terminal determines, based on the indication information and an Rx branch supported by the terminal on the band to which the cell belongs, whether the cell is barred for the terminal. The DL MIMO layer supported by the terminal on the band to which the cell belongs may indicate the Rx branch supported by the terminal on the band to which the cell belongs.

In this embodiment of this application, the access network device and the terminal have consistent understanding of a DL MIMO layer capability of the terminal indicating an Rx branch capability of the terminal. Specifically, if the terminal indicates a 1 DL MIMO layer capability for a band, it is considered that an Rx branch capability of the terminal is supporting 1 Rx branch; if the terminal indicates a 2 DL MIMO layers capability for a band, it is considered that an Rx branch capability of the terminal is supporting 2 Rx branches; or if the terminal indicates both a 1 DL MIMO layer capability and a 2 DL MIMO layers capability for a band, it is considered that an Rx branch capability of the terminal is supporting both 1 Rx branch and 2 Rx branches. The band mentioned in the foregoing content may be a band belonging to an FR1.

The following further describes a rule for determining a cell bar mechanism of a RedCap UE, that is, describes how to determine, based on the indication information and the DL MIMO layer supported by the terminal on the band to which the cell belongs, whether the cell is barred for the terminal.

Optionally, in a case that the terminal supports the 1 DL MIMO layer and the 2 DL MIMO layers on the band to which the cell belongs, if the indication information indicates that the cell is barred for the terminal supporting 1 Rx branch and the cell is not barred for the terminal supporting 2 Rx branches, or if the indication information indicates that the cell is not barred for the terminal supporting 1 Rx branch and the cell is barred for the terminal supporting 2 Rx branches, that is, the indication information indicates that the cell is barred for only the terminal supporting 1 Rx branch or the terminal supporting 2 Rx branches, it is determined that the cell is not barred for the terminal.

Optionally, if the indication information indicates that the cell is barred for the terminal supporting 1 Rx branch, and the cell is not barred for the terminal supporting 2 Rx branches, the terminal camps on or accesses the cell by using a capability feature set corresponding to the 2 DL MIMO layers. If the indication information indicates that the cell is not barred for the terminal supporting 1 Rx branch, and the cell is barred for the terminal supporting 2 Rx branches, the terminal camps on or accesses the cell by using a capability feature set corresponding to the 1 DL MIMO layer. In other words, when a cell is barred only for a terminal supporting one type of Rx branch, the terminal may camp on or access the cell based on a capability feature set corresponding to another type of Rx branch that is not indicated as barred.

In an example, the terminal supports 1 DL MIMO layer and 2 DL MIMO layers on the band to which the cell belongs. In addition, the cell is barred for the terminal supporting 1 Rx branch. In this case, the terminal may camp on or access the cell based on a capability feature set corresponding to the 2 DL MIMO layers capability (that is, corresponding to 2 Rx branches).

Optionally, in a case that the terminal supports 1 DL MIMO layer and/or 2 DL MIMO layers on the band to which the cell belongs, if the indication information indicates that the cell is barred for the terminal supporting 1 Rx branch, and the cell is barred for the terminal supporting 2 Rx branches, it is determined that the cell is barred for the terminal.

Optionally, in a case that the terminal supports 1 DL MIMO layer and/or 2 DL MIMO layers on the band to which the cell belongs, if the indication information indicates that the cell is not barred for the terminal supporting 1 Rx branch and the cell is not barred for the terminal supporting 2 Rx branches, it is determined that the cell is not barred for the terminal. Optionally, if the terminal supports 1 DL MIMO layer and 2 DL MIMO layers on the band to which the cell belongs, the terminal can camp on or access the cell based on a capability feature set corresponding to the 1 DL MIMO layer capability or the 2 DL MIMO layers capability, that is, the terminal can select any type of capability. Optionally, after accessing the cell, the terminal switches to an RRC connected state. In this case, the access network device may decide a specific capability feature set, of the terminal, based on which the terminal is configured. The terminal performs, based on the decision of the access network device, configuration corresponding to the capability feature set.

In a possible implementation, in consideration of that the standard has specified that the RedCap UE needs to support 2 Rx branches in an FR2, the cell bar determining scheme described in the foregoing embodiment may be applied only to a cell on an FR1 band. That is, the band to which the cell belongs in the foregoing described content belongs to an FR1. For a cell on an FR2 band, the RedCap UE does not determine, based on a DL MIMO layer capability indicated by the RedCap UE, whether the cell is barred, but instead, directly considers that the RedCap UE supports 2 Rx branches, and then determines, based on whether the indication information of the access network device is set to "the cell is barred for the terminal supporting 2 Rx branches", whether the cell is barred for the terminal.

Optionally, in this embodiment of this application, after an access network device participating in paging receives a first capability indication message or a second capability indication message, capability entries in the first capability indication message and the second capability indication message each include three values, and the access network device may determine, based on RedCap Rx branch capability information in the first capability indication message and a cell bar setting status of the cell, whether paging for the UE needs to be sent, which is specifically as follows.

If the RedCap specific cell bar field in the SIB1 of the cell indicates that the current cell is barred for a RedCap UE supporting 1 Rx branch, and the paged RedCap UE (on the band to which the cell belongs) is a RedCap UE supporting 1 Rx branch, paging for the RedCap UE does not need to be sent in the cell. If the RedCap specific cell bar field in the SIB1 of the cell indicates that the current cell is barred for a RedCap UE supporting 2 Rx branches, and the paged RedCap UE (on the band to which the cell belongs) is a RedCap UE supporting 2 Rx branches, paging for the RedCap UE does not need to be sent in the cell.

In the embodiment shown in FIG. 5, for a RedCap terminal having both a 1 DL MIMO layer capability and a 2 DL MIMO layers capability on one band, how to determine the cell bar is considered. Specifically, it is specified that the terminal considers that the cell is barred and cannot camp on or access the cell only when the cell is barred for both the terminal supporting 1 Rx branch and the terminal supporting 2 Rx branches. In other cases, the terminal does not consider that the cell is indicated as barred. Optionally, the terminal may camp on or access the cell based on a capability feature set corresponding to the Rx branch that is not indicated as barred. This solution can increase a probability that the RedCap UE finds a cell that the RedCap UE can camp on or access, so that implementation of the terminal is more flexible. When a terminal using a capability feature set corresponding to an Rx branch is barred in a cell, the terminal can operate, without a need to trigger an update of a capability of the terminal, based on capabilities corresponding to another Rx branch capability, that is, the terminal does not need to unnecessarily update the capability of the terminal, so that communication performance of the RedCap UE is improved. In addition, adverse impact of the RedCap UE on system performance can also be avoided because when a terminal supports a specific Rx branch that is barred in a cell, the RedCap terminal camps on or accesses the cell based on a capability feature set corresponding to another Rx branch that is not barred, so that problems, such as consumption/occupation of more cell resources, can be avoided.

In the foregoing described embodiments provided in this application, the method provided in embodiments of this application is described from a perspective of interaction between devices such as a terminal, an access network device, and a core network device. To implement functions in the foregoing methods provided in embodiments of this application, devices, such as a terminal and an access network device, may include a hardware structure, a software module, and implement the foregoing functions in a form of the hardware structure, the software module, or a combination of the hardware structure and the software module. One of the foregoing various functions may be performed in the form of the hardware structure, the software module, or the combination of the hardware structure and the software module.

FIG. 6 is a diagram of a structure of a communication apparatus according to an embodiment of this application. The communication apparatus 60 may correspondingly implement functions or steps implemented by the access network device in the foregoing method embodiments, and therefore, can also implement beneficial effects of the foregoing method embodiments. The communication apparatus 60 may be an access network device, or may be a module (for example, a chip) applied to an access network device.

The communication apparatus 60 includes a receiving unit 601 and a sending unit 602.

The receiving unit 601 is configured to receive capability information from a terminal, where the capability information indicates a quantity of downlink multiple-input multiple-output layers DL MIMO layers supported by the terminal on at least one first band.

The sending unit 602 is configured to send first capability indication information or second capability indication information, where the first capability indication information indicates a receive branch Rx branch supported by the terminal on at least one second band, the second capability indication information indicates an Rx branch supported by the terminal, the at least one second band belongs to the at least one first band, and the first capability indication information or the second capability indication information is determined based on the capability information.

In a possible implementation, the first capability indication information includes a capability entry and a band identifier of the at least one second band. The capability entry indicates an Rx branch capability. One capability entry corresponds to a second band indicated by one band identifier. In this manner, the first capability indication information may explicitly indicate a correspondence between an Rx branch capability and a band.

Optionally, in consideration of that the standard has specified that the RedCap UE needs to support 2 Rx branches in the FR2, in the explicit indication manner, it is no longer necessary to indicate a capability status of the terminal on an FR2 band in the first capability indication information, and the first capability indication information may only indicate a capability status of the terminal on an FR1 band. That is, the band identifier included in the first capability indication information is only a band identifier of a band belonging to the FR1, and the capability entry included in the first capability indication information is only a capability entry corresponding to the band belonging to the FR1. In this way, an amount of information included in the first capability indication information can be reduced, and overheads of transferring the first capability indication information can be reduced.

In a possible implementation, the first capability indication information includes a capability entry, and the capability entry indicates an Rx branch capability. The first capability indication information is carried in a first message, the first message further includes band list information, and the band list information indicates the at least one second band supported by the terminal. One capability entry corresponds to one second band. In this manner, the first capability indication information may implicitly indicate a correspondence between an Rx branch capability and a band. Since at present, an inter-node message already includes the band list information indicating a band list supporting paging, in this manner, the band list information may be reused, thereby reducing overheads of transferring the first capability indication information.

In a possible implementation, the capability entry has a first value and a second value. The first value indicates that the terminal supports 1 Rx branch on a band corresponding to the capability entry. The second value indicates that the terminal supports 2 Rx branches on a band corresponding to the capability entry.

In a possible implementation, if the capability information indicates that the terminal supports 1 DL MIMO layer and 2 DL MIMO layers on one band, in the first capability indication information, a value of a capability entry corresponding to the band is the second value. In this manner, if capability information reported by the terminal indicates that the terminal supports 1 DL MIMO layer and 2 DL MIMO layers on one band, it is considered that an Rx branch capability of the terminal on the band is an Rx branch capability corresponding to a highest DL MIMO layer capability, that is, a 2 Rx branches capability. Therefore, in the first capability indication information, a value of a capability entry corresponding to the band is a second value.

In a possible implementation, the capability entry has a first value, a second value, and a third value. The first value indicates that the terminal supports 1 Rx branch on a band corresponding to the capability entry. The second value indicates that the terminal supports 2 Rx branches on a band corresponding to the capability entry. The third value indicates that the terminal supports 1 Rx branch and 2 Rx branches on a band corresponding to the capability entry. In this manner, if the capability information reported by the terminal indicates that the terminal supports 1 DL MIMO layer and 2 DL MIMO layers on one band, it is considered that an Rx branch capability of the terminal on the band is coexistence of two Rx branch capabilities, that is, a 1 Rx branch capability and a 2 Rx branches capability, and in the first capability indication information, a value of a capability entry corresponding to the band is the third value.

In a possible implementation, the method is applied to an access network device. The access network device has a capability of generating the first capability indication information and the second capability indication information. The sending unit 602 is specifically configured to: send second capability indication information if the capability information indicates that the terminal supports a same DL MIMO layer on each of the at least one second band, or indicates that the terminal supports a same DL MIMO layer on each band that is of the at least one second band and that belongs to a frequency range 1 FR1; or send the first capability indication information if the capability information does not indicate that the terminal supports a same DL MIMO layer on each of the at least one second band, nor indicates that the terminal supports a same DL MIMO layer on each band that is of the at least one second band and that belongs to a frequency range 1 FR1.

In this implementation, it is specified that an access network device (which may be understood as a new base station) having a capability of generating the first capability indication information and the second capability indication information uses the second capability indication information in specific cases and uses the first capability indication information in specific cases. This allows the new base station to accurately transfer RedCap Rx branch capability information and lowers signaling overheads for transferring the information as much as possible. If Rx branch capabilities supported by the RedCap UE in all (FR1) bands are the same, the terminal granularity-specific second capability indication information may be used, and the band granularity-specific first capability indication information does not need to be used, to avoid repeatedly indicating same information for each band.

With reference to the first aspect, in a possible implementation, the method is applied to an access network device. The access network device has a capability of generating the second capability indication information and does not have a capability of generating the first capability indication information. The sending unit 602 is specifically configured to send the second capability indication information if the capability information indicates that the terminal supports a same DL MIMO layer on each of the at least one second band, or indicates that the terminal supports a same DL MIMO layer on each band that is of the at least one second band and that belongs to a frequency range 1 FR1.

In this implementation, it is specified that an access network device (which may be understood as a conventional base station) having a capability of generating the second capability indication information can use the second capability indication information in specific cases and cannot use the second capability indication information in specific cases, so that behaviors of a conventional base station can be regulated. A problem that a terminal cannot be paged because inconsistency between RedCap Rx branch capability information set by the conventional base station and a capability reported by the terminal causes a base station participating in the paging to incorrectly determine a paging range based on inaccurate information is avoided. In addition, the conventional base station is caused to have an opportunity to use the second capability indication information in specific cases, so that during paging, the base station has an opportunity to use a paging optimization mechanism to reduce unnecessary overheads.

For more detailed descriptions of the receiving unit 601 and the sending unit 602, refer to the description in the method embodiment shown in FIG. 4. Details are not described herein again.

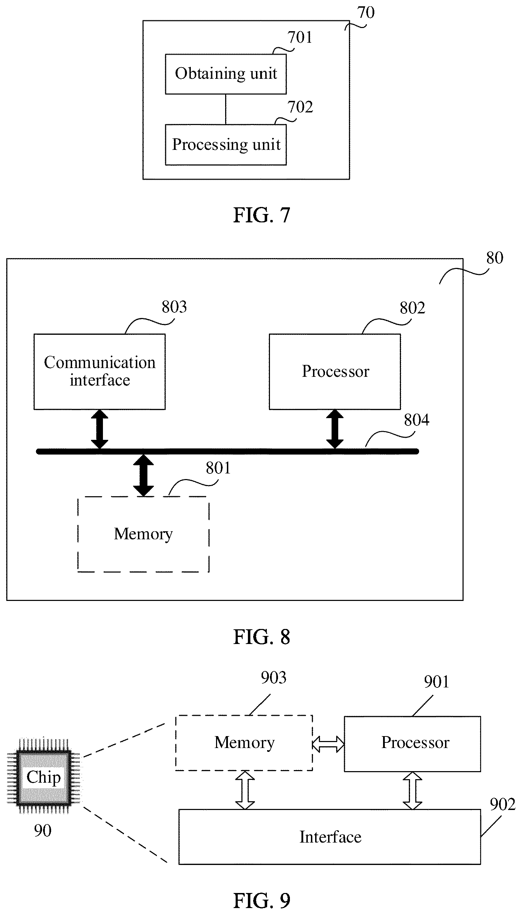

FIG. 7 is a diagram of a structure of a communication apparatus according to an embodiment of this application. The communication apparatus 70 may correspondingly implement functions or steps implemented by the terminal in the foregoing method embodiments, and therefore, can also implement beneficial effects of the foregoing method embodiments. The communication apparatus 70 may be a terminal, or may be a module (such as a chip) used in a terminal.

The communication apparatus 70 includes an obtaining unit 701 and a processing unit 702.

The obtaining unit 701 is configured to obtain indication information, where the indication information indicates whether a cell is barred for a terminal supporting a 1 receive branch 1 Rx branch and whether the cell is barred for a terminal supporting 2 Rx branches.

The processing unit 702 is configured to determine, based on the indication information and a quantity of downlink multiple-input multiple-output layers DL MIMO layers supported by a terminal on a band to which the cell belongs, whether the cell is barred for the terminal.

In a possible implementation, the processing unit 702 is specifically configured to: when the terminal supports 1 DL MIMO layer and 2 DL MIMO layers on the band to which the cell belongs, if the indication information indicates that the cell is barred for the terminal supporting 1 Rx branch and the cell is not barred for the terminal supporting 2 Rx branches, or if the indication information indicates that the cell is not barred for the terminal supporting 1 Rx branch and the cell is barred for the terminal supporting 2 Rx branches, determine that the cell is not barred for the terminal.

In this implementation, if the terminal supports 1 DL MIMO layer and 2 DL MIMO layers on the band to which the cell belongs, in a case that the cell is barred for one of the terminal supporting 1 Rx branch and the terminal supporting 2 Rx branches, it is specified that the terminal considers that the cell is not barred and can camp on or access the cell.

In a possible implementation, if the indication information indicates that the cell is barred for the terminal supporting 1 Rx branch, and the cell is not barred for the terminal supporting 2 Rx branches, the terminal camps on or accesses the cell by using a capability feature set corresponding to the 2 DL MIMO layers. If the indication information indicates that the cell is not barred for the terminal supporting 1 Rx branch, and the cell is barred for the terminal supporting 2 Rx branches, the terminal camps on or accesses the cell by using a capability feature set corresponding to the 1 DL MIMO layer.

In this implementation, the terminal may camp on or access the cell based on a capability feature set corresponding to the Rx branch that is not indicated as barred. This solution can increase a probability that the RedCap UE finds a cell that the RedCap UE can camp on or access, so that implementation of the terminal is more flexible. When a cell bars a type of terminal supporting an Rx branch capability feature set, the terminal can work based on capabilities corresponding to another set of Rx branch capabilities without triggering an update of capabilities of the terminal, that is, the terminal does not need to unnecessarily update capabilities of the terminal, thereby improving communication performance of the RedCap UE. In addition, adverse impact of the RedCap UE on system performance can also be avoided because when a terminal supports a specific Rx branch that is barred in a cell, the RedCap terminal camps on or accesses the cell based on a capability feature set corresponding to another Rx branch that is not barred, so that problems, such as consumption/occupation of more cell resources, can be avoided.

In a possible implementation, the processing unit 702 is specifically configured to: in a case that the terminal supports 1 DL MIMO layer and/or 2 DL MIMO layers on the band to which the cell belongs, if the indication information indicates that the cell is barred for the terminal supporting 1 Rx branch, and the cell is barred for the terminal supporting 2 Rx branches, determine that the cell is barred for the terminal.

In this implementation, it is specified that the terminal considers that the cell is barred and cannot camp on or access the cell only when the cell is barred for both a terminal supporting 1 Rx branch and a terminal supporting 2 Rx branches.

In a possible implementation, the processing unit 702 is specifically configured to: in a case that the terminal supports 1 DL MIMO layer and/or 2 DL MIMO layers on the band to which the cell belongs, if the indication information indicates that the cell is not barred for the terminal supporting 1 Rx branch and the cell is not barred for the terminal supporting 2 Rx branches, determine that the cell is not barred for the terminal.

In this implementation, it is specified that the terminal considers that the cell is not barred and can camp on or access the cell when the cell is barred for neither of a terminal supporting 1 Rx branch and a terminal supporting 2 Rx branches. Optionally, if the terminal supports 1 DL MIMO layer and 2 DL MIMO layers on the band to which the cell belongs, the terminal can camp on or access the cell based on a capability feature set corresponding to the 1 DL MIMO layer capability or the 2 DL MIMO layers capability, that is, the terminal can select any type of capability. Optionally, after accessing the cell, the terminal switches to an RRC connected state. In this case, the access network device may decide a specific capability feature set, of the terminal, based on which the terminal is configured. The terminal performs, based on the decision of the access network device, configuration corresponding to the capability feature set.

In a possible implementation, the band to which the cell belongs belongs to a frequency range 1 FR1. In this implementation, in consideration of that the standard has specified that the RedCap UE needs to support 2 Rx branches in an FR2, the cell bar determining scheme described in the foregoing implementation may be applied only to a cell on an FR1 band. For a cell on an FR2 band, the RedCap UE does not determine, based on a DL MIMO layer capability indicated by the RedCap UE, whether the cell is barred, but instead, directly considers that the RedCap UE supports 2 Rx branches, and then determines, based on whether the indication information of the access network device is set to "the cell is barred for the terminal supporting 2 Rx branches", whether the cell is barred for the terminal.

For more detailed descriptions of the obtaining unit 701 and the processing unit 702, refer to the description in the method embodiment shown in FIG. 5. Details are not described herein again.

FIG. 8 is a diagram of a structure of a communication apparatus 80 according to an embodiment of this application. The communication apparatus 80 may be an access network device or a terminal, and can implement functions or steps of the access network device or the terminal in the method provided in embodiments of this application. The communication apparatus 80 may be a chip system. In this embodiment of this application, the chip system may include a chip, or may include a chip and another discrete component.

The communication apparatus 80 includes at least one processor 802. The processor 802 may be a central processing unit (central processing unit, CPU), a microprocessor, an application-specific integrated circuit (application-specific integrated circuits, ASIC), or one or more integrated circuits configured to control program execution in the solutions of this application, and is configured to implement or support the communication apparatus 80 in implementing functions of the access network device or the terminal in the methods provided in embodiments of this application.

When the communication apparatus 80 is configured to implement functions of the access network device in embodiments of this application, the processor 802 is configured to implement or support the communication apparatus 80 in implementing the following operations:
receiving capability information from a terminal, where the capability information indicates a quantity of downlink multiple-input multiple-output layers DL MIMO layers supported by the terminal on at least one first band; and
sending first capability indication information or second capability indication information, where the first capability indication information indicates a receive branch Rx branch supported by the terminal on at least one second band, the second capability indication information indicates an Rx branch supported by the terminal, the at least one second band belongs to the at least one first band, and the first capability indication information or the second capability indication information is determined based on the capability information.

For example, for operations performed by the processor 802, refer to the description in the method shown in FIG. 4.

When the communication apparatus 80 is configured to implement functions of the terminal in embodiments of this application, the processor 802 is configured to implement or support the communication apparatus 80 in implementing the following operations:
obtaining indication information, where the indication information indicates whether a cell is barred for a terminal supporting a 1 receive branch 1 Rx branch and whether the cell is barred for a terminal supporting 2 Rx branches; and
determining, based on the indication information and a quantity of downlink multiple-input multiple-output layers DL MIMO layers supported by a terminal on a band to which the cell belongs, whether the cell is barred for the terminal.

For example, for operations performed by the processor 802, refer to the description in the method shown in FIG. 5.

The communication apparatus 80 may further include at least one memory 801, configured to store program instructions and/or data. The memory 801 is coupled to the processor 802. The coupling in this embodiment of this application may be an indirect coupling or a communication connection between apparatuses, units, or modules in an electrical form, a mechanical form, or another form, and is used for information exchange between the apparatuses, the units, or the modules. The processor 802 may cooperate with the memory 801 for operation. The processor 802 may execute the program instructions and/or the data stored in the memory 801, so that the communication apparatus 80 implements the corresponding method. At least one of the at least one memory may be included in the processor 802.

The communication apparatus 80 may further include a communication interface 803, and is configured to communicate with another device or a communication network, for example, an Ethernet, a radio access network (radio access network, RAN), a wireless local area network (wireless local area network, WLAN), or a wired access network by using any apparatus like a transceiver. The communication interface 803 is configured to communicate with another device by using a transmission medium, so that an apparatus in the communication apparatus 80 may communicate with the another device. For example, when the communication apparatus 80 is an access network device, the another device is a terminal; or when the communication apparatus 80 is a terminal, the another device is an access network device. The processor 802 may send and receive data through the communication interface 803. The communication interface 803 may be specifically a transceiver.

A specific connection medium between the communication interface 803, the processor 802, and the memory 801 is not limited in this embodiment of this application. In this embodiment of this application, in FIG. 8, the memory 801, the processor 802, and the communication interface 803 are connected to each other by a bus 804. The bus is represented by a thick line in FIG. 8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus.

In this embodiment of this application, the processor 802 may be a general purpose processor, a digital signal processor, an application-specific integrated circuit, a field programmable gate array or another programmable logic device, a discrete gate or a transistor logic device, or a discrete hardware component, so that the methods, steps, and logical block diagrams that are disclosed in embodiments of this application may be implemented or performed. The general purpose processor may be a microprocessor or any conventional processor or the like. Steps of the methods disclosed with reference to embodiments of this application may be directly performed by a hardware processor, or may be performed by using a combination of hardware and a software unit in the processor.

The memory 801 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a magnetic disk storage medium or another magnetic storage device, or any other medium that can be configured to carry or store expected program code in a form of an instruction or a data structure and that can be accessed by a computer. However, this is not limited thereto. The memory may exist independently, and is connected to the processor by the bus 804. The memory may alternatively be integrated with the processor.

The memory 801 is configured to store computer-executable instructions for executing the solutions of this application, and the processor 802 controls the execution. The processor 802 is configured to execute the computer-executable instructions stored in the memory 801, to implement the communication methods provided in the foregoing embodiments of this application.

Optionally, the computer-executable instructions in embodiments of this application may also be referred to as application program code. This is not specifically limited in embodiments of this application.

For a case in which the communication apparatus may be a chip or a chip system, refer to a diagram of a structure of a chip in FIG. 9. The chip 90 shown in FIG. 9 includes a processor 901 and an interface 902. There may be one or more processors 901 and a plurality of interfaces 902.

For a case in which the chip is configured to implement functions of the access network device in embodiments of this application:
the processor 901 is configured to receive capability information from a terminal through the interface 902, where the capability information indicates a quantity of downlink multiple-input multiple-output layers DL MIMO layers supported by the terminal on at least one first band.

The processor 901 is further configured to send first capability indication information or second capability indication information through the interface 902, where the first capability indication information indicates a receive branch Rx branch supported by the terminal on at least one second band, the second capability indication information indicates an Rx branch supported by the terminal, the at least one second band belongs to the at least one first band, and the first capability indication information or the second capability indication information is determined based on the capability information.

For example, for operations performed by the processor 901, refer to the description in the method shown in FIG. 4.

For a case in which the chip is configured to implement a function of the terminal in embodiments of this application:
the processor 901 is configured to obtain indication information through the interface 902, where the indication information indicates whether a cell is barred for a terminal supporting a 1 receive branch 1 Rx branch and whether the cell is barred for a terminal supporting 2 Rx branches.

The processor 901 is further configured to determine, based on the indication information and a quantity of downlink multiple-input multiple-output layers DL MIMO layers supported by a terminal on a band to which the cell belongs, whether the cell is barred for the terminal.

For example, for operations performed by the processor 901, refer to the description in the method shown in FIG. 5.

Optionally, the chip further includes a memory 903. The memory 903 is configured to store program instructions and data that are necessary for the terminal device.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the protection scope of embodiments of this application.

An embodiment of this application further provides a communication system. Specifically, the communication system includes an access network device and a terminal. For example, the communication system includes an access network device and a terminal that are configured to implement related functions in FIG. 4 and FIG. 5.

An embodiment of this application further provides a computer-readable storage medium, including instructions. When the instructions are run on a computer, the computer is enabled to perform the method performed by the access network device or the terminal in FIG. 4 and FIG. 5.

An embodiment of this application further provides a computer program product, including instructions. When the instructions are run on a computer, the computer is enabled to perform the method performed by the access network device or the terminal in FIG. 4 and FIG. 5.

An embodiment of this application provides a chip system. The chip system includes a processor, and may further include a memory, configured to implement functions of the method performed by the access network device or the terminal in the foregoing method. The chip system may include a chip, or may include a chip and another discrete component.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

"Predefine" in this application may be understood as "define", "predefine", "store", "pre-store", "pre-negotiate", "pre-configure", "solidify", or "pre-burn".

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving capability information from a terminal, wherein the capability information indicates a quantity of downlink multiple-input multiple-output layers DL MIMO layers supported by the terminal on at least one first band; and
sending first capability indication information or second capability indication information, wherein the first capability indication information indicates a receive branch Rx branch supported by the terminal on at least one second band, the second capability indication information indicates an Rx branch supported by the terminal, the at least one second band belongs to the at least one first band, and the first capability indication information or the second capability indication information is determined based on the capability information.

2. The method according to claim 1, wherein the first capability indication information comprises a capability entry and a band identifier of the at least one second band, wherein the capability entry indicates an Rx branch capability, and one capability entry corresponds to a second band indicated by one band identifier.

3. The method according to claim 1, wherein the first capability indication information comprises a capability entry, and the capability entry indicates an Rx branch capability;
the first capability indication information is carried in a first message, the first message further comprises band list information, and the band list information indicates the at least one second band supported by the terminal; and
one capability entry corresponds to one second band.

4. The method according to claim 2 or 3, wherein the capability entry has a first value and a second value, the first value indicates that the terminal supports 1 Rx branch on a band corresponding to the capability entry, and the second value indicates that the terminal supports 2 Rx branches on a band corresponding to the capability entry.

5. The method according to claim 4, wherein if the capability information indicates that the terminal supports 1 DL MIMO layer and 2 DL MIMO layers on one band, in the first capability indication information, a value of a capability entry corresponding to the band is the second value.

6. The method according to claim 2 or 3, wherein the capability entry has a first value, a second value, and a third value, the first value indicates that the terminal supports 1 Rx branch on a band corresponding to the capability entry, the second value indicates that the terminal supports 2 Rx branches on a band corresponding to the capability entry, and the third value indicates that the terminal supports 1 Rx branch and 2 Rx branches on a band corresponding to the capability entry.

7. The method according to any one of claims 1 to 6, wherein the method is applied to an access network device, and the access network device has a capability of generating the first capability indication information and the second capability indication information; and
sending the first capability indication information or the second capability indication information comprises:
sending the second capability indication information if the capability information indicates that the terminal supports a same DL MIMO layer on each of the at least one second band, or indicates that the terminal supports a same DL MIMO layer on each band that is of the at least one second band and that belongs to a frequency range 1 FR1; or
sending the first capability indication information if the capability information does not indicate that the terminal supports a same DL MIMO layer on each of the at least one second band, nor indicates that the terminal supports a same DL MIMO layer on each band that is of the at least one second band and that belongs to a frequency range 1 FR1.

8. The method according to any one of claims 1 to 6, wherein the method is applied to an access network device, and the access network device has a capability of generating the second capability indication information, and does not have a capability of generating the first capability indication information; and
sending the first capability indication information or the second capability indication information comprises:
sending the second capability indication information if the capability information indicates that the terminal supports a same DL MIMO layer on each of the at least one second band, or indicates that the terminal supports a same DL MIMO layer on each band that is of the at least one second band and that belongs to a frequency range 1 FR1.

9. A communication method, wherein the method comprises:
obtaining indication information, wherein the indication information indicates whether a cell is barred for a terminal supporting a 1 receive branch 1 Rx branch and whether the cell is barred for a terminal supporting 2 Rx branches; and
determining, based on the indication information and a quantity of downlink multiple-input multiple-output layers DL MIMO layers supported by a terminal on a band to which the cell belongs, whether the cell is barred for the terminal.

10. The method according to claim 9, wherein determining, based on the indication information and the quantity of downlink multiple-input multiple-output layers DL MIMO layers supported by the terminal on the band to which the cell belongs, whether the cell is barred for the terminal comprises:
when the terminal supports 1 DL MIMO layer and 2 DL MIMO layers on the band to which the cell belongs,
if the indication information indicates that the cell is barred for the terminal supporting 1 Rx branch and the cell is not barred for the terminal supporting 2 Rx branches, or if the indication information indicates that the cell is not barred for the terminal supporting 1 Rx branch and the cell is barred for the terminal supporting 2 Rx branches,
determining that the cell is not barred for the terminal.

11. The method according to claim 10, wherein the method further comprises:
if the indication information indicates that the cell is barred for the terminal supporting 1 Rx branch, and the cell is not barred for the terminal supporting 2 Rx branches, camping on or accessing, by the terminal, the cell by using a capability feature set corresponding to the 2 DL MIMO layers; or
if the indication information indicates that the cell is not barred for the terminal supporting 1 Rx branch, and the cell is barred for the terminal supporting 2 Rx branches, camping on or accessing, by the terminal, the cell by using a capability feature set corresponding to the 1 DL MIMO layer.

12. The method according to claim 9, wherein determining, based on the indication information and the quantity of downlink multiple-input multiple-output layers DL MIMO layers supported by the terminal on the band to which the cell belongs, whether the cell is barred for the terminal comprises:
when the terminal supports 1 DL MIMO layer and/or 2 DL MIMO layers on the band to which the cell belongs,
if the indication information indicates that the cell is barred for the terminal supporting 1 Rx branch and the cell is barred for the terminal supporting 2 Rx branches, determining that the cell is barred for the terminal.

13. The method according to claim 9, wherein determining, based on the indication information and the quantity of downlink multiple-input multiple-output layers DL MIMO layers capability supported by the terminal on the band to which the cell belongs, whether the cell is barred for the terminal comprises:
when the terminal supports 1 DL MIMO layer and/or 2 DL MIMO layers on the band to which the cell belongs,
if the indication information indicates that the cell is not barred for the terminal supporting 1 Rx branch and the cell is not barred for the terminal supporting 2 Rx branches, determining that the cell is not barred for the terminal.

14. The method according to any one of claims 9 to 13, wherein the band to which the cell belongs to a frequency range 1 FR1.

15. A communication apparatus, comprising a unit configured to perform the method according to any one of claims 1 to 8, or comprising a unit configured to perform the method according to any one of claims 9 to 14.

16. A communication apparatus, comprising a processor and a communication interface, wherein
the communication interface is configured to: receive a signal from another communication apparatus other than the communication apparatus and perform transmission of the signal to the processor, or send a signal from the processor to another communication apparatus other than the communication apparatus; and
the processor is configured to implement the method according to any one of claims 1 to 8 or the method according to any one of claims 9 to 14 through a logic circuit or by executing code instructions.

17. A computer-readable storage medium, wherein the computer-readable storage medium stores a computer program or instructions; and when the computer program or instructions are executed by a communication apparatus, the method according to any one of claims 1 to 8 or the method according to any one of claims 9 to 14 is implemented.
